# NEUE EUROPÄISCHE PATENTSCHRIFT

(11) **EP 0 906 557 B2**
(45) Veröffentlichungstag und Bekanntmachung des Hinweises auf die Entscheidung über den Einspruch: **19.05.2004**
(45) Hinweis auf die Patenterteilung: 01.12.1999
(21) Anmeldenummer: 97909358.0
(22) Anmeldetag: 02.10.1997
(51) Int. Cl.: G01C 19/56

(54) **DREHRATENSENSOR MIT ENTKOPPELTEN ORTHOGONALEN PRIMÄR- UND SEKUNDÄRSCHWINGUNGEN**
ROTATION RATE SENSOR WITH UNCOUPLED MUTUALLY PERPENDICULAR PRIMARY AND SECONDARY OSCILLATIONS
DETECTEUR DE ROTATION A OSCILLATIONS PRIMAIRES ET SECONDAIRES ORTHOGONALES DECOUPLEES

(30) Priorität: 07.10.1996 DE 19641284
(43) Veröffentlichungstag der Anmeldung: 07.04.1999
(73) Patentinhaber: HAHN-SCHICKARD-GESELLSCHAFT FÜR ANGEWANDTE FORSCHUNG E.V., D-78052 Villingen-Schwenningen (DE)
(72) Erfinder: FOLKMER, Bernd, D-78050 Villingen-Schwenningen (DE); GEIGER, Wolfram, D-78078 Niedereschach (DE); LANG, Walter, D-78050 Villingen-Schwenningen (DE); SOBE, Udo, D-09627 Oberbobritzsch (DE)
(74) Vertreter: Schoppe, Fritz, Dipl.-Ing.
(86) Internationale Anmeldenummer: PCT/EP1997/005445
(87) Internationale Veröffentlichungsnummer: WO 1998/015799

(56) Entgegenhaltungen:
- EP-A- 0 634 629
- DE-A- 19 500 800
- JP-A- 5 312 576
- JP-A- 8 159 776

## Beschreibung

Die vorliegende Erfindung bezieht sich auf Bewegungssensoren und insbesondere auf mikromechanische Drehratensensoren, die die Coriolis-Kraft ausnutzen.

Mikromechanische Coriolis-Kraft-Drehratensensoren besitzen vielfältige Anwendungsfelder, von denen beispielsweise die Positionsbestimmung eines Automobils oder eines Flugzeuges zu nennen ist. Allgemein besitzen solche Sensoren eine bewegliche mechanische Struktur, welche zu einer periodischen Schwingung angeregt wird. Diese periodische, durch Anregung erzeugte Schwingung wird als Primärschwingung bezeichnet. Erfährt der Sensor eine Drehung um eine Achse senkrecht zur Primärschwingung oder Primärbewegung, so führt die Bewegung der Primärschwingung zu einer Coriolis-Kraft, die proportional zur Meßgröße, d.h. der Winkelgeschwindigkeit, ist. Durch die Coriolis-Kraft wird eine zweite, zur Primärschwingung orthogonale Schwingung angeregt. Diese zweite, zur Primärschwingung orthogonale Schwingung wird Sekundärschwingung genannt. Die Sekundärschwingung, die auch als Detektionsschwingung bezeichnet wird, kann durch verschiedene Meßverfahren erfaßt werden, wobei die erfaßte Größe als Maß für die auf den Drehratensensor wirkende Drehrate dient.

Um die Primärschwingung zu erzeugen, werden unter anderem thermische, piezoelektrische, elektrostatische und induktive Verfahren verwendet, welche in der Technik bekannt sind. Zu der Erfassung der Sekundärschwingung sind piezoelektrische, piezoresistive und kapazitive Prinzipien Stand der Technik.

Bekannte mikromechanische Drehratensensoren sind in K. Funk, A. Shilp, M. Offenberg, B. Elsner und F. Lärmer, *"Surface Micromachining Resonant Silicon structures*", The 8th International Conference on Solid-State Sensors and Actuators, Eurosensors IX, NEWS, S. 50-52, beschrieben. Insbesondere weist ein in dieser Schrift beschriebener bekannter quasi-rotierender Drehratensensor einen kreisförmigen Schwinger auf, der in zwei Richtungen drehbar an einer Basis aufgehängt ist. Der Schwinger des bekannten Drehratensensors zeigt eine bezüglich einer x-y-Ebene scheibenförmige Gestalt, wobei an zwei sich gegenüberliegenden Seiten der Scheibe Kammelektroden-Konfigurationen angebracht sind. Eine Kammelektroden-Konfiguration wird zum Treiben des Schwingkörpers verwendet, wobei sich dieselbe aus feststehenden Kammelektroden und den Kammelektroden des Schwingers, die in die feststehenden Kammelektroden eingreifen, zusammensetzt. Eine dazu ähnliche Kammelektrodenerfassungsanordnung besteht aus feststehenden Kammelektroden, die in entsprechende Kammelektroden eingreifen, die an dem Primärschwinger angebracht sind. Die eingangsseite Kammelektroden-Konfiguration zum Treiben des Schwingers, die auch Comb-Drive genannt wird, ist auf geeignete Weise mit einer Erregungsspannung verbunden, derart, daß eine erste Kammelektroden-Konfiguration mit einer Wechselspannung gespeist wird, wohingegen eine zweite Kammelektroden-Konfiguration des Comb-Drives mit einer zur ersten Spannung zum 180° phasenverschobenen zweiten Spannung gespeist wird. Durch die angelegte Wechselspannung wird der Schwinger zu einer Drehschwingung um die z-Achse erregt, die auf der x-y-Ebene senkrecht steht. Die Schwingung des Schwingers in der x-y-Ebene ist die vorher genannte Primärschwingung.

Wird der bekannte Drehratensensor nun mit einer bestimmten Winkelgeschwindigkeit um eine y-Achse gedreht, so wirkt auf den Schwinger eine Coriolis-Kraft, die zu der angelegten Winkelgeschwindigkeit um die y-Achse proportional ist. Diese Coriolis-Kraft erzeugt eine Drehschwingung des Schwingers um die x-Achse. Diese Drehschwingung oder periodische "Verkippung" des Schwingers um die x-Achse kann mit den beiden unter dem Sensor liegenden Elektroden kapazitiv gemessen werden.

Ein Nachteil dieser bekannten Struktur besteht darin, daß die Primärschwingung und die Sekundärschwingung, die die Schwingung des Schwingkörpers aufgrund der auf denselben wirkenden Coriolis-Kraft ist, von einem einzigen Schwinger ausgeführt werden, der mittels eines zweiachsigen Gelenks aufgehängt ist, um die beiden zueinander orthogonalen Schwingungen ausführen zu können. Die beiden Schwingungsmoden, d.h. die Primärschwingung und die Sekundärschwingung, sind daher nicht voneinander entkoppelt, weshalb die Eigenfrequenzen der Primär- und der Sekundärschwingung nicht unabhängig voneinander genau abgeglichen werden können, um eine möglichst hohe Erfassungsgenauigkeit des Drehratensensors zu erreichen. Ferner führt bei dem bekannten Drehratensensor die Sekundärschwingung dazu, daß die Kammelektrodenanordnung zum Treiben des Schwingers verkippt wird, wodurch die Primärschwingungvon der Sekundärschwingung beeinflußt wird. Dieser Einfluß führt zu einer nicht vollständig harmonisch gesteuerten Primärschwingung als Reaktion auf die Rückwirkung der Sekundärschwingung auf die Primärschwingung, d.h. als Reaktion auf eine Verkippung des Comb-Drives zur Erzeugung der Primärschwingung.

Ein weiterer bekannter Drehratensensor, der in dieser Schrift beschrieben ist, umfaßt zwei voneinander getrennte Schwingungsmassen, die durch jeweilige Comb-Drives, die über Federbalken mit jeweils einer Masse verbunden sind, in eine gegenphasige Schwingung versetzt werden können. Die beiden Massen sind über eine Federbalkenanordnung miteinander verbunden und führen aufgrund einer Aufhängung der Anordnung aus den beiden Massen und den Verbindungsstegen der Massen eine Drehschwingung in der x-y-Ebene durch, wenn der Drehratensensor einer Drehung um die z-Achse unterzogen wird. Eine Verschiebung der Anordnung aus den beiden Massen und den Federbalken, welche die Massen untereinander verbinden, in der y-Achse als Reaktion auf eine Drehung dieser Anordnung wird mittels vier Kammelektroden-Konfigurationen kapazitiv erfaßt.

Genauso wie der erste beschriebene bekannte Drehratensensor weist auch der zweite bekannte Drehratensensor lediglich einen einzigen Schwinger für sowohl die Primär- als auch die Sekundärschwingung auf, wodurch die beiden orthogonalen Schwingungsmoden miteinander verkoppelt sind, und die durch die Coriolis-Kraft erzeugte Sekundärschwingung auf die Primärschwingung rückwirken kann. Auch diese Struktur erlaubt daher keinen genauen, selektiven Abgleich der Eigenfrequenzen der Primär- und der Sekundärschwingung.

Ein weiteres bekanntes Vibrationsgyroskop ist in dem Artikel von P.Greiff u.a. mit dem Titel "*Silicon Monolithic Micromechanical Gyroscope*" in dem Konferenzband der Transducers 1991 auf den S. 966 bis 968 beschrieben. Dieses Gyroskop ist eine zweifach kardanische Struktur in der x-y-Ebene, die durch Torsionsfedern getragen wird. Eine rahmenförmige erste Schwingerstruktur umgibt eine plattenförmige zweite Schwingerstruktur. Die zweite Schwingerstruktur weist ein Trägheitselement auf, das aus der Ebene derselben in der z-Richtung vorsteht. Im Betrieb wird eine rotatorische Erregung um die y-Achse der ersten Schwingerstruktur über Torsionsfedern, die in Richtung der ersten Schwingung steif sind, auf die zweite Schwingerstruktur übertragen. In der Anwesenheit einer Drehwinkelgeschwindigkeit um die z-Achse wird eine Coriolis-Kraft in der y-Richtung erzeugt, die an dem vorstehenden Trägheitselement oder Gyroelement angreift, um die zweite Schwingerstruktur um die x-Achse auszulenken, wodurch die zweite Schwingerstruktur eine zur Erregungsschwingung orthogonale Coriolis-Schwingung um die x-Achse ausführt, die durch die Torsionsfedern, die die zweite Schwingerstruktur an der ersten Schwingerstruktur aufhängen, ermöglicht wird. Die Coriolis-Kraft, die bei diesem Gyroskop lediglich in y-Richtung anliegt, führt nicht zu einer Bewegung der restlichen Struktur, da dieselbe in der y-Richtung fest gehalten ist. Lediglich das in z-Richtung vorstehende Gyroelement bietet einen Angriffspunkt für die Coriolis-Kraft, damit dieselbe eine meßbare zur Zwangsdrehung proportionale Bewegung bewirken kann.

Obgleich bei dieser Struktur die erste und die zweite Schwingung voneinander entkoppelt sind, und keine Rückwirkung der zweiten Schwingung auf die Erregung der ersten Schwingung stattfindet, besteht ein Nachteil darin, daß die zweite Schwingerstruktur aufgrund des überstehenden Gyroelements nicht planar angefertigt werden kann. Nach der Herstellung der Gyroskopstruktur wird das Gyroelement mittels Gold-Elektroplattierung auf der zweiten Schwingerstruktur gebildet. Diese Elektroplattierung ist nicht günstig in einen im wesentlichen planaren monolithischen Herstellungsprozess integrierbar, wodurch die Herstellungszeit und die Herstellungsschritte mehr werden und die Kosten für das Gyroskop steigen.

Die DE 44 28 405 A1 offenbart einen Drehratensensor, der eine Anregungsaktorik mit Combdrives und zwei Schwingmassen aufweist, welche über Federelemente miteinander zu einem schwingungsfähigen System verbunden sind. Der Drehratensensor umfaßt insbesondere eine erste Schwingungsstruktur, die mittels Combdrives zu einer Anregungsschwingung angeregt werden kann. Über Verbindungspunkte wird die Anregungsschwingung von der ersten Schwingungsstruktur auf eine zweite Masse übertragen. Verschiedene Federn und Halteeinrichtungen verbinden die zweite Masse mit einer zentralen Schwingmasse, wobei die Federn bewirken, daß die Anregungsschwingung von der zweiten Schwingmasse auf die zentrale Schwingmasse übertragen wird, und daß die beiden Schwingmassen aufgrund der Anregungsschwingung gegenphasig zueinander schwingen. Bei einer Drehung des Drehratensensors wirkt u. a. auf die zentrale Schwingmasse eine Coriolis-Kraft, welche bewirkt, daß sich diese senkrecht zur Anregungsschwingung bewegt. Auf die zweite Masse wirkt ebenfalls die Coriolis-Kraft, wobei dieselbe eine zur zentralen Masse entgegengesetzte Coriolis-Schwingung erfährt, die deswegen entgegengesetzt ist, da die zwei Massen gegenphasigen Anregungsschwingungen haben.

Die DE 195 00 800 A1 offenbart Coriolis-Drehratensensoren mit zwei Schwingmassen, die mechanisch miteinander gekoppelt sind und eine Schwingstruktur bilden. Die zwei Schwingmassen weisen an ihren gegenüberliegenden Stirnseiten jeweils zwei symmetrisch angeordnete Biegefedern auf, durch die die Schwingmassen unter Verwendung zusätzlicher Siliziumstege miteinander mechanisch gekoppelt sind. Bei einer ersten Kategorie von Coriolis-Drehratensensoren werden ohne Verwendung eines Primärschwingers die Sekundärschwinger direkt angeregt. Bei einer zweiten Kategorie von Coriolis-Drehratensensoren werden zwei Schwingmassen mittels eines Primärschwingers zu gegenphasigen Schwingungen angeregt, wobei ein Steg die Primärschwingung auf die Sekundärschwinger überträgt, deren Schwingung durch einen Haltepunkt, der mit einem Substrat verbunden ist, sowie durch an demselben angebrachte Federn geführt wird.

Die EP 0 634 629 A offenbart einen Winkelgeschwindigkeitssensor mit einem ersten Schwingelement, das von einem ersten Trägerbalken getragen wird, und mit einem zweiten Schwingelement, das mittels eines zweiten Trägerbalkens mit dem ersten Schwingelement verbunden ist. Der erste Trägerbalken, durch den das erste Schwingelement mit dem Substrat verbunden ist, ist zusätzlich mit einem Kammantrieb versehen, um das erste Schwingelement in einer ersten Richtung in Schwingung zu versetzen. Der zweite Trägerbalken, der das erste Schwingelement und das zweite Schwingelement verbindet, erlaubt ebenfalls eine Schwingung in der ersten Richtung, wodurch die Anregungsschwingung zum einen auf das zweite Schwingelement übertragen wird und zum anderen verstärkt wird. Wenn der Winkelgeschwindigkeitssensor um eine Achse gedreht wird, die senkrecht zur ersten Richtung ist, wirkt eine Coriolis-Kraft auf die Anordnung, die zu einer Auslenkung des zweiten Schwingelements in z-Richtung führt. Das erste Schwingelement wird dabei in Richtung der Coriolis-Kraft bewegbar gehalten.

Die Aufgabe der vorliegenden Erfindung besteht darin, einen wirtschaftlich herstellbaren Drehratensensor zu schaffen, bei dem die Primär- und die Sekundärschwingung weitgehend entkoppelt sind.

Diese Aufgabe wird durch einen Drehratensensor gemäß Anspruch 1 gelöst.

Der Erfindung liegt die Erkenntnis zugrunde, daß eine Entkopplung der Primär- und der Sekundärschwingung erreicht werden kann, indem ein Primärschwinger vorgesehen ist, welcher mittels einer Primärschwingeraufhängung einem Grundkörper gegenüber bewegbar gehalten ist. Eine an den Primärschwinger angelegte Primärschwingung wird über eine Sekundärschwingeraufhängung auf einen Sekundärschwinger übertragen, wodurch der Sekundärschwinger ebenfalls die Primärschwingung ausführt. Eine aufgrund einer Drehung des Drehratensensors vorhandene Coriolis-Kraft führt zu einer zur Primärschwingung des Sekundärschwingers orthogonalen Sekundärschwingung des Sekundärschwingers, welche durch eine geeignete Ausgestaltung der Sekundärschwingeraufhängung nicht auf den Primärschwinger rückwirkt. Die Primärschwingeraufhängung kann abhängig vom jeweiligen Ausführungsbeispiel geeignet dimensionierten Federbalken (z.B. Torsionsfedern oder Biegefedern) bestehen, deren Querschnitt und geometrische Anordnung (z.B. Diagonalstreben, Anzahl, usw.) derart gestaltet sind, daß dieselbe eine richtungsabhängige Federsteifigkeit aufweist. Diese Anisotropie der Steifigkeit der Aufhängung kann im Prinzip ausschließlich durch die Anordnung der Federbalken gewährleistet werden. Die Sekundärschwingung wirkt somit nicht auf den Primärschwinger zurück, wodurch die Anregung nicht durch die Meßgröße beeinflußt wird. Durch Bereitstellen eines Sekundärschwingers, der von dem Primärschwinger getrennt ist, und durch die Konfigurationen der Primärschwingeraufhängung und der Sekundärschwingeraufhängung, welche von der Primärschwingeraufhängung ebenfalls räumlich getrennt ist und lediglich vorzugsweise eine anisotrope Steifigkeit besitzt, sind die Primär- und die Sekundärschwingung weitestgehend voneinander entkoppelt, weshalb sowohl die Primär- als auch die Sekundärschwingung unabhängig voneinander abgeglichen werden können.

Ein beim Stand der Technik vorhandenes gewissermaßen in einem räumlichen Punkt konzentriertes zweiachsiges Gelenk für einen Schwinger, das die zueinander orthogonalen Primär- und Sekundärschwingungen des einzigen Schwingers zuläßt, wird bei dem Drehratensensor gemäß der vorliegenden Erfindung in zwei voneinander getrennte Gelenke und Schwinger übergeführt, die zum einen die Primärschwingeraufhängung bzw. der Primärschwinger und zum anderen die Sekundärschwingeraufhängung bzw. der Sekundärschwinger sind. Das Bereitstellen eines zweiten Schwingers, d.h. des Sekundärschwingers, der über die Sekundärschwingeraufhängung mit dem Primärschwinger verbunden ist, ermöglicht es, daß die beiden Schwingungen entkoppelt werden können. Der Primärschwinger wird zu einer translatorischen oder rotatorischen Schwingung angeregt, welche über die Sekundärschwingeraufhängung auf den Sekundärschwinger übertragen wird. Eine aufgrund einer Drehung des Drehratensensors wirkende Coriolis-Kraft wirkt jedoch aufgrund einer geeigneten Gestaltung der Primärschwingeraufhängung nur auf den Sekundärschwinger, und nicht auf den Primärschwinger, weswegen die Anregung von der Meßgröße nicht beeinflußt wird. Ferner kann durch die Sekundärschwingeraufhängung die Schwingung des Sekundärschwingers aufgrund der Coriolis-Kraft nur unwesentlich auf die Bewegung des Primärschwingers übertragen werden. Somit erlaubt der Drehratensensor gemäß der vorliegenden Erfindung zwar eine Übertragung der Primärschwingung von dem Primärschwinger auf den Sekundärschwinger, jedoch keine Übertragung der Sekundärschwingung zurück auf den Primärschwinger.

Durch den Aufbau des Vibrationsgyroskops gemäß der vorliegenden Erfindung, derart, daß sich sowohl der Primär- als auch der Sekundärschwinger im wesentlichen in der gleichen Ebene erstrecken, wird die Herstellung einfach, da das Vibrationsgyroskop vollständig kompatibel mit bekannten planaren Herstellungsprozessen hergestellt werden kann. Dadurch, daß ferner die Primärschwingung und/oder die Sekundärschwingung in der Ebene, in der auch der Primärschwinger und der Sekundärschwinger gebildet sind, stattfinden, kann die Coriolis-Kraft immer derart auf den im wesentlichen planaren Sekundärschwinger wirken, daß er zu einer Schwingung angeregt werden kann.

Bevorzugte Ausführungsbeispiele der vorliegenden Erfindung werden nachfolgend bezugnehmend auf die beiliegenden Zeichnungen detaillierter erläutert. Es zeigen:
- Fig. 1A: eine Draufsicht eines Drehratensensors gemäß einem ersten Ausführungsbeispiel der vorliegenden Erfindung;
- Fig. 1B: einen Querschnitt des Drehratensensors aus Fig. 1A;
- Fig. 2: eine Draufsicht eines Drehratensensors gemäß einem zweiten Ausführungsbeispiel der vorliegenden Erfindung;
- Fig. 3: eine Draufsicht eines Drehratensensors gemäß einem dritten Ausführungsbeispiel der vorliegenden Erfindung;

- Fig. 4A: eine Draufsicht eines Drehratensensors gemäß einem vierten Ausführungsbeispiel der vorliegenden Erfindung;
- Fig. 4B: einen Querschnitt des Drehratensensors von Fig. 4A entlang der Linie A-B; und
- fig. 5: eine Draufsicht eines Drehratensensors gemäß einem fünften Ausführungsbeispiel der vorliegenden Erfindung.

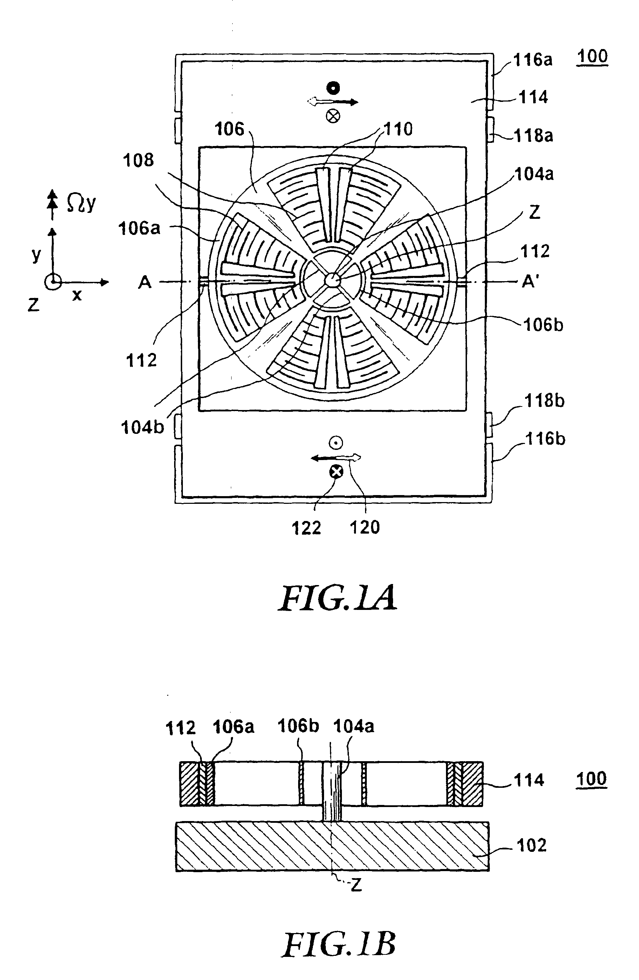

Fig. 1A zeigt in der Draufsicht einen Drehratensensor 100 gemäß einem ersten Ausführungsbeispiel dervorliegenden Erfindung, während Fig. 1B einen schematischen Querschnitt des Drehratensensors 100 entlang der Linie A-A' aus Fig. 1A darstellt. Der Drehratensensor 100 weist einen Grundkörper 102 auf, an dem mittels einer Primärschwingeraufhängung 104, die eine Verankerung 104a und vier Federbalken 104b aufweist, ein Primärschwinger 106 befestigt ist. Der Primärschwinger 106 weist einen äußeren Ring 106a und einen inneren Ring 106b auf. Zwischen dem äußeren Ring 106a und dem inneren Ring 106b des Primärschwingers 106 sind Gruppen von kammartigen Elektroden 108 angeordnet. Die Elektrodengruppen 108 des Primärschwingers greifen jeweils fingerartig in gegenüberliegende feststehende Elektrodengruppen 110 ein. Als Primärschwingeraufhängung ist abweichend vom ersten Ausführungsbeispiel auch eine Konfiguration möglich, bei der vier Verankerungen in der x-y-Ebene angeordnet sind, derart, daß Verbindungslinien zwischen jeweils zwei gegenüberliegenden Verankerungen einen rechten Winkel zueinander bilden. Am Schnittpunkt dieser als Federbalken ausgeführten Verbindungslinien, d.h. dem Symmetriezentrum der Primärschwingeraufhängung, sind dann die z.B. vier Federbalken (104) angeordnet.

Eine Elektrodengruppe 108 des Primärschwingers bildet mit einer gegenüber angeordneten feststehenden Elektrodengruppe 110 einen sogenannten Comb-Drive oder Kammantrieb, dessen Funktionsweise herkömmlich ist. Die feststehenden Elektrodengruppen 110 können beispielsweise mit dem Grundkörper 102 verbunden oder auf andere Weise dem Primärschwinger gegenüber fest angeordnet sein, was jedoch in Fig. 1B aus Übersichtlichkeitsgründen nicht dargestellt ist. Der Primärschwinger 106 ist über Torsionsfedern 112 mit einem Sekundärschwinger 114 verbunden. Die Torsionsfeder 112 stellt somit die Sekundärschwingeraufhängung dar, mittels der der Sekundärschwinger 114 mit dem Primärschwinger 106 mechanisch gekoppelt ist.

Der Sekundärschwinger 114 kann bei einem Drehratensensor gemäß dem ersten Ausführungsbeispiel der vorliegenden Erfindung eine rechteckige Form annehmen, wobei derselbe eine Ausnehmung aufweist, in der der Primärschwinger 106 angeordnet ist, wie es in Fig. 1A dargestellt ist. An der bezüglich Fig. 1A oberen bzw. unteren Seite des Sekundärschwingers befinden sich unter demselben auf dem Grundkörper 102 erste Erfassungselektroden 116a, 116b, sowie optional zusätzliche Elektroden 118a, 118b, deren Zweck nachfolgend beschrieben wird.

Zur Erläuterung der Funktionsweise des Drehratensensors 100 sowie aller weiteren Drehratensensoren gemäß der vorliegenden Erfindung wird nachfolgend auf das jeweils links in jeder Figur eingezeichnete kartesische Koordinatensystem mit den zueinander orthogonalen Achsen x, y und z Bezug genommen.

Wenn der Drehratensensor 100 verwendet wird, um eine Drehung desselben um die y-Achse mit einer Winkelgeschwindigkeit Ω_{y} zu erfassen, so muß der Primärschwinger 106 zu einer Drehschwingung angeregt werden. Dies geschieht auf für Fachleute bekannte Art und Weise durch Anlegen geeigneter Wechselspannungen an jeweils gegenüberliegende Comb-Drives, welche aus den jeweils ineinandergreifenden Elektrodengruppen 108 des Primärschwingers 106 sowie aus den denselben jeweils gegenüberliegenden feststehenden Elektrodengruppen 110 gebildet werden. Ein Comb-Drive führt das für Fachleute bekannte kapazitive Antriebsprinzip aus. Zum Erregen des Primärschwingers 106 zu einer Drehschwingung in der x-y-Ebene können beispielsweise vier Comb-Drives verwendet werden, während die anderen vier Comb-Drives zur kapazitiven Erfassung eben dieser Drehschwingung in der x-y-Ebene verwendet werden. Bei einer Drehung des Primärschwingers 106 um die z-Achse werden die vier Federbalken 104b jeweils durch ein Drehmoment um die z-Achse abgebogen. Wie es aus Fig. 1B ersichtlich ist, weisen die vier Federbalken 104b einen rechteckigen Querschnitt auf, wobei die lange Seite des Querschnitts entlang der z-Richtung verläuft, während die kurze Seite derselben in der x-y-Ebene angeordnet ist.

Die Schwingung des Primärschwingers 106 in der x-y-Ebene wird somit über die Torsionsfedern 112 auf den Sekundärschwinger übertragen, wodurch derselbe ebenfalls eine Drehung in der x-y-Ebene vollführt, wie es durch die Pfeile 120 schematisch symbolisiert ist. Die auf den Sekundärschwinger wirkende Coriolis-Kraft aufgrund der Drehung des Drehratensensors 100 um eine zur y-Achse parallele Achse führt zu einer Drehschwingung des Sekundärschwingers 114 um die x-Achse, wie es durch die bekannte Notation 122 symbolisch dargestellt ist. Die Coriolis-Kraft, die selbstverständlich auch auf den Primärschwinger 106 wirkt, führt jedoch aufgrund der beschriebenen Geometrie der Federbalken 104b, d.h. der Primärschwingeraufhängung 104, nicht zu einer Verkippung des Primärschwingers 106 um die x-Achse. Ferner kann der Sekundärschwinger 114 seine Drehbewegung um die x-Achse aufgrund der Coriolis-Kraft nicht auf den Primärschwinger 106 übertragen, da die Torsionsfedern 112 eine wesentlich geringere Torsionsfestigkeit gegenüber einer Drehung um die x-Achse als die Primärschwingeraufhängung 104 aufweist, die aus der Verankerung 104a und den Federbalken 104b besteht.

Die Bewegung des Sekundärschwingers 114, der aus einem elektrisch leitfähigen Material bestehen kann, wie z.B. aus Polysilizium, wird über die darunter liegenden Erfassungselektroden 116a und 116b kapazitiv erfaßt. Das Vorhandensein von zwei Erfassungselektroden 116a und 116b ermöglicht ein differentielles Meßverfahren, durch das auf bekannte Weise u.a. die Empfindlichkeit des Sensors im Vergleich zu einem einfachen Meßverfahren verdoppelt wird.

Durch Rückkopplung einer geeigneten Spannung an die beiden Erfassungselektroden 116a und 116b oder durch Anlegen einer Spannung an die zusätzlichen Elektroden 118 und 118b kann die Coriolis-Kraft in einem bestimmten Bereich kompensiert werden, wodurch die Bandbreite des Drehratensensors 100 vergrößert wird. Wird beispielsweise eine Wechselspannung an die Erfassungselektroden 116a und 116b oder an die zusätzlichen Elektroden 118a und 118b angelegt, die der Schwingung des Sekundärschwingers bis zu einem bestimmten Grad entgegenwirkt, so können größere Coriolis-Kräfte auf den Sekundärschwinger 114 gemessen werden, ohne daß das mechanische System zu große Schwingungsamplituden erleidet.

Der Abgleich der Eigenfrequenzen erfolgt durch ein elektrostatisches Anpassen der Eigenfrequenz der Sekundärschwingung. Das Anlegen einer Gleichspannung an die Elektroden 116a, 116b oder an die zusätzlichen Elektroden 118a, 118b verringert die Eigenfrequenz der Sekundärschwingung. Durch Rückkoppeln einer Wechselspannung an die genannten Elektroden kann die Eigenfrequenz der Sekundärschwingung auch erhöht werden. Durch den Abgleich der Eigenfrequenzen wird der Drehratensensor für kleinere Winkelgeschwindigkeiten Ω_{y} empfindlicher.

Zusammenfassend läßt sich feststellen, daß beim ersten Ausführungsbeispiel die Hauptoberflächen, d.h. die in Fig. 1 gezeichneten Oberflächen, sowohl des Primär- als auch des Sekundärschwingers in der x-y-Ebene angeordnet sind, wobei die Primärschwingung ebenfalls in dieser Ebene erzeugt wird. Damit wird durch eine Rotation des Sensors eine Coriolis-Kraft senkrecht zur x-y-Ebene erzeugt, weshalb keine vorstehenden Elemente wie beim Stand der Technik notwendig sind. Ferner wird auf vorteilhafte Weise das Hebelarmprinzip ausgenutzt, wodurch zwei besonders bei einer mikromechanischen Realisierung kritische Schwierigkeiten umgangen werden. Relativ kleine Biegungen der länglichen Federbalken 104b erlauben große Auslenkungen, d.h. eine große Schwingungsamplitude und Geschwindigkeit des Sekundärschwingers 106 in Richtung der Primärschwingung. Damit ist es möglich, die Federbalken 104b im linearen Biegungsbereich zu betreiben. Eine weitere vorteilhafte Eigenschaft des Drehratensensors 100 gemäß dem ersten Ausführungsbeispiel der vorliegenden Erfindung besteht in der mechanischen Kompensation von Störkräften, wie z.B. Kräften aufgrund von auf den Sekundärschwinger wirkenden translatorischen Beschleunigungen, da der Sekundärschwinger 114 in der Erfassungsrichtung nur durch Drehmomente, die um die x-Achse wirken, ausgelenkt werden kann.

Für Fachleute ist es offensichtlich, daß die Bezugnahme auf ein x-y-z-Koordinatensystem lediglich die Beschreibung der vorliegenden Erfindung vereinfacht und der Klarheit förderlich ist, da der Drehratensensor 100 sowie alle im nachfolgenden beschriebenen Drehratensensoren gemäß anderen Ausführungsbeispielen der vorliegenden Erfindung in jeder beliebigen Anordnung positioniert werden können. Die Bezugnahme auf das x-y-z-Koordinatensystem dient lediglich der Beschreibung der Richtungsverhältnisse der einzelnen Bewegungen in Relation zueinander. Ersichtlich ist auch, daß der Sensor bei einer Drehung um eine beliebige Achse die Komponenten in Richtung seiner sensitiven Achse(n) detektiert.

Es ist ferner für Fachleute offensichtlich, daß die Anzahl der Federbalken 104b und die Anordnung derselben entlang der Winkelhalbierenden der x-y-Ebene lediglich beispielhaft ist. Entscheidend ist, daß die Steifigkeit der Aufhängung 104 gegenüber einer Drehung um die x-Achse ausreichend groß ist, um ein Verkippen des Primärschwingers 106 gegenüber den feststehenden Elektroden 110 zu verhindern, um eine Rückwirkung der Sekundärschwingung auf die Primärschwingung, d.h. auf die Anregungsanordnung für die Primärschwingung, zu vermeiden. So würden im einfachsten Fall bereits zwei Federbalken ausreichend sein, die parallel zu der y-Achse angeordnet sind und die Verankerung 104a mit dem inneren Ring 106b des Primärschwingers verbinden. Ein Anordnen der Federbalken 104b in der x-Achse ist weniger vorteilhaft, als ein Anordnen derselben in einem Winkel zur x-Achse. Diese Bemerkungen bezüglich der Steifigkeit der Aufhängungen gelten für alle Ausführungsbeispiele und insbesondere auch für die Sekundärschwingeraufhängungen, auch wenn sie im nachfolgenden nicht mehr explizit wiederholt werden.

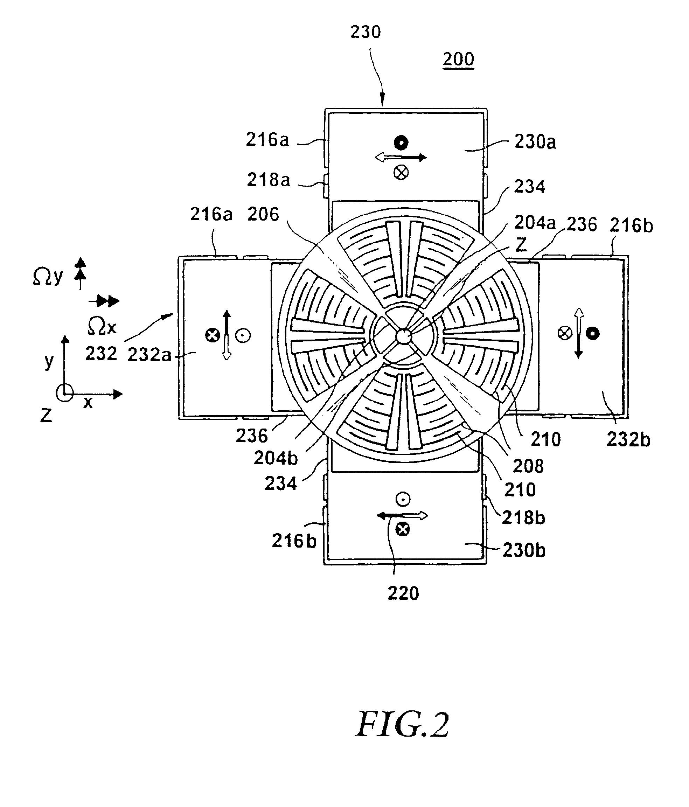

Fig. 2 zeigt in der Draufsicht ein zweites Ausführungsbeispiel eines Drehratensensors 200 gemäß der vorliegenden Erfindung. Der Drehratensensor 200 weist einen Primärschwinger 206 auf, der zu dem Primärschwinger 106 des Drehratensensors 100 im wesentlichen identisch ist. Der Primärschwinger 206 ist über eine Primärschwingeraufhängung 204, die eine Verankerung 204a und vier Federbalken 204b aufweist, entsprechend dem ersten Ausführungsbeispiel der vorliegenden Erfindung mit einem Grundkörper (nicht gezeigt) verbunden.

Ein Unterschied des Drehratensensors 200 im Vergleich zum Drehratensensor 100 besteht darin, daß der Drehratensensor 200 eine Drehung desselben sowohl um eine Achse parallel zur y-Achse als auch eine Drehung desselben um eine zur x-Achse parallelen Achse erfassen kann. Dies ist durch das Vorhandensein zweier Sekundärschwinger 230, 232 möglich. Der erste Sekundärschwinger 230 besteht aus einem ersten Teil 230a und aus einem zweiten Teil 230b. Ebenso besteht der zweite Sekundärschwinger 232 aus einem ersten Teil 232a und aus einem zweiten Teil 232b. Der erste Teil 230a sowie der zweite Teil 230b sind über eine erste Sekundärschwingeraufhängung 234 mit dem Primärschwinger 206 verbunden. Analog dazu sind der erste Teil 232a und der zweite Teil 232b des zweiten Sekundärschwingers 232 über zweite Sekundärschwingeraufhängungen 236 mit dem Primärschwinger 206 verbunden.

Der erste Sekundärschwinger 230 ist derart bezüglich des Primärschwingers 206 ausgerichtet, daß seine Symmetrieachse parallel zur y-Achse ist und die z-Achse, um die der Primärschwinger 206 eine Drehschwingung ausführt, schneidet. Eine Symmetrieachse des zweiten Sekundärschwingers 232 steht dagegen senkrecht auf der Symmetrieachse des ersten Sekundärschwingers 230. Der erste Sekundärschwinger ist somit parallel zur y-Achse ausgerichtet, während der zweite Sekundärschwinger 232 parallel zur x-Achse ausgerichtet ist.

Die beiden Sekundärschwingeraufhängungen 234 und 236 sind als Federbalken ausgeführt, wobei die Federbalken der ersten Sekundärschwingeraufhängung 234 und die Federbalken der zweiten Sekundärschwingeraufhängung 236 durch eine in der z-Richtung wirkende Kraft auslenkbar sind, gegenüber einer Kraft in der x- oder in der y-Richtung jedoch im wesentlichen steif sein können. Ihre Querschnittsgeometrie entspricht somit einem Rechteck, dessen lange Seite in der x-y-Ebene angeordnet ist, während ihre schmale Seite in der z-Richtung vorgesehen ist. An dieser Stelle sei darauf hingewiesen, daß die Querschnittsgeometrie der Federbalken, welche bei der vorliegende Erfindung verwendet werden, nicht auf ein Rechteck begrenzt ist, sondern daß auch beispielsweise eine ovale oder eine andere Querschnittsgeometrie verwendet werden kann, welche es ermöglicht, daß ein solcher Federbalken in einer Richtung eine höhere Federsteifigkeit als in einer anderen Richtung aufweist. Die Anisotropie der Steifigkeit könnte jedoch, wie es bereits angemerkt wurde, ebenfalls durch geeignete Anordnung der Federbalken erreicht werden.

Wird der Primärschwinger 206 durch Anlegen einer geeigneten Wechselspannung an jeweilige Elektrodengruppen 208 des Primärschwingers und entsprechende feststehende Elektrodengruppen 210 angeregt, so wird er eine Drehschwingung in der x-y-Ebene ausführen. Diese Drehschwingung wird über die erste Sekundärschwingeraufhängung und über die zweite Sekundärschwingeraufhängung auf die Sekundärschwinger 230 und 232 übertragen, wie es durch die Pfeile 220 schematisch dargestellt ist. Eine Drehung des Drehratensensors 200 um eine zu der y-Achse parallelen Achse mit einer Winkelgeschwindigkeit Ω_{y} führt zu einer Drehschwingung des ersten Sekundärschwingers 230 um die x-Achse, welche über Erfassungselektroden 216a, 216b des ersten Sekundärschwingers, wie es beim ersten Ausführungsbeispiel beschrieben wurde, erfaßt werden kann. Eine Drehung des Drehratensensors 200 um die x-Achse mit einer Winkelgeschwindigkeit Ωₓ führt dagegen zu einer Drehschwingung des zweiten Sekundärschwingers 232 um die y-Achse. Unter dem zweiten Sekundärschwinger sind genauso wie unter dem ersten Sekundärschwinger entsprechende Erfassungselektroden 216a, 216b sowie zusätzliche Elektroden 218a, 218b vorgesehen.

Die Erfassung der Drehungen um die x- oder um die y-Achse des Drehratensensors 200 sowie der Abgleich der Eigenfrequenzen durch elektrostatisches Anpassen der Eigenfrequenz der Sekundärschwingung erfolgt genauso, wie es beim ersten Ausführungsbeispiel beschrieben worden ist. Der Drehratensensor 200 stellt also genauso wie der Drehratensensor 100 einen Sensor mit elektrostatischem Antrieb und kapazitivem Meßprinzip dar. Für Fachleute ist es jedoch offensichtlich, daß der kapazitive Antrieb sowie das kapazitive Meßprinzip lediglich beispielhaft sind, da beliebige andere für Fachleute bekannte Antriebs- und Meßprinzipien bei allen beschriebenen und noch zu beschreibenden Ausführungsbeispielen der vorliegenden Erfindung eingesetzt werden können.

Ein Vorteil des Drehratensensors 200 gegenüber dem Drehratensensor 100 besteht darin, daß eine zweiachsige Messung einer Drehung möglich ist. Nachteilig an dem Drehratensensor 200 gegenüber dem Drehratensensor 100 ist die Tatsache, daß der Drehratensensor 200 keine mechanische Kompensation translatorischer Störkräfte aufweist, da sowohl der erste Sekundärschwinger 230 als auch der zweite Sekundärschwinger 232 nicht nur durch Drehmomente, sondern auch durch translatorische Kräfte in z-Richtung ablenkbar sind. Translatorische Störungen können jedoch durch elektrische Differenzmessung ausgeglichen werden kann, da die durch die Drehung verursachte Bewegung der Sekundärschwinger gegenläufig ist, während translatorische Störungen eine gleichphasige Bewegung derselben erzeugen.

An dieser Stelle sei darauf hingewiesen, daß die günstigste Form der Elektroden 116, 118, 216, 218 nicht rechteckig ist, obwohl dieselben in den Figuren derart dargestellt sind. Die günstigste Form besteht insbesondere darin, daß die Kanten der Elektroden an den Stellen, an denen sie unter den beweglichen Elektroden, d.h. den Sekundärschwingern 114, 230a, 230b, 232a, 232b, "heraustreten", entlang eines Drehradius verlaufen, und zwar innerhalb und außerhalb, um bei der kapazitiven Erfassung der Sekundärschwingung durch die Drehbewegung der Sekundärschwinger keine Kapazitätsänderungen (im Idealfall die Fläche eines Plattenkondensators) einzuführen, die der Meßgröße überlagert sind und zu Meßfehlern führen können. Ebenfalls können die Sekundärschwinger andere als rechteckige Formen aufweisen, solange sie eine Hauptoberfläche besitzen, die zur Hauptoberfläche des Primärschwingers parallel ist.

Wie beim ersten Ausführungsbeispiel der vorliegenden Erfindung läßt sich feststellen, daß die Hauptoberflächen, d.h. die in Fig. 2 gezeichneten Oberflächen sowohl des Primärals auch der Sekundärschwinger in der x-y-Ebene angeordnet sind, wobei die Primärschwingung ebenfalls in dieser Ebene erzeugt wird. Damit wird durch eine Rotation des Sensors eine Coriolis-Kraft senkrecht zur x-y-Ebene erzeugt, weshalb ebenfalls keine vorstehenden Elemente notwendig sind.

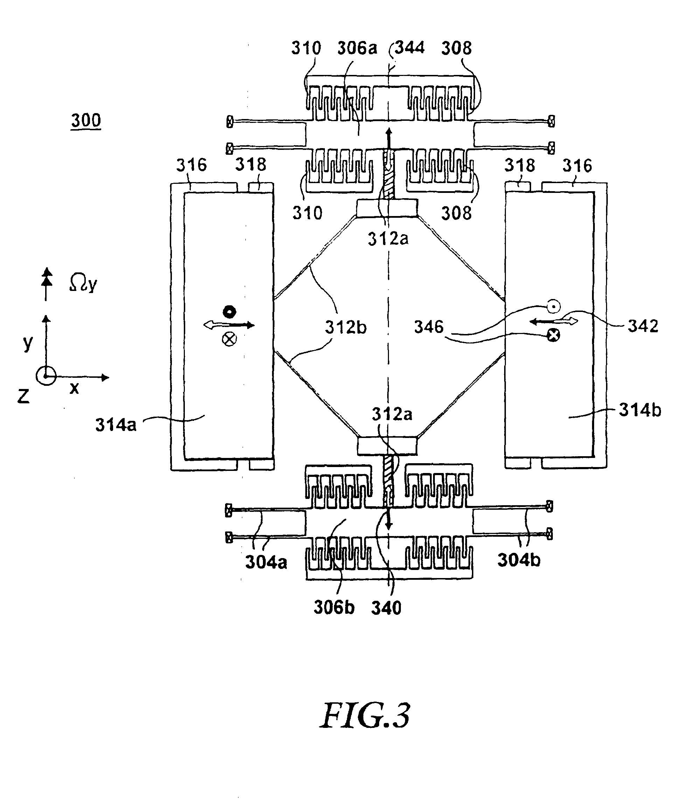

Fig. 3 zeigt eine Draufsicht einen Drehratensensors 300 gemäß einem dritten Ausführungsbeispiel der vorliegenden Erfindung. Der Drehratensensor 300 arbeitet nach dem Prinzip der Tuning Fork, das für Fachleute bekannt ist und in J. Bernstein, S. Cho, A.I. King, A. Kourepins, P. Maclel und M. Weinberg, "*A Micromachined Comb-Drive Tuning Fork Rate Gyroscope*", Proc. IEEE Micro Electromechanical Systems Conference, Florida, USA, Februar 1993, Seiten 143-148, beschrieben ist. Wie es in Fig. 3 gezeigt ist, umfaßt der Drehratensensor 300 einen ersten Primärschwinger 306a, sowie einen zweiten Primärschwinger 306b. Sowohl der erste Primärschwinger 306a als auch der zweite Primärschwinger 306b sind mittels identischer Primärschwingeraufhängungen 304 an einem Grundkörper (nicht gezeigt) befestigt, wobei sich jede Primärschwingeraufhängung aus einer Verankerung 304a und einem Federbalken 304b zusammensetzt. Jeder Primärschwinger umfaßt ferner Elektrodengruppen 308, die in feststehende Elektrodengruppen 310 eingreifen, um den ersten Primärschwinger 306a sowie den zweiten Primärschwinger 306b in eine parallel zur y-Achse gerichtete translatorische Schwingung zu versetzen. Jeder Primärschwinger ist mittels einer Sekundärschwingeraufhängung 312 mit einem Sekundärschwinger, bestehend aus einem ersten Sekundärschwinger 314a und einem zweiten Sekundärschwinger 314b, verbunden. Jede Sekundärschwingeraufhängung 312 besteht aus zwei Torsionsfedern 312a sowie aus vier Federbalken 312b.

Wird nun an die Comb-Drives, die durch die jeweiligen Elektrodengruppen 308 und 310 gebildet sind, eine Wechselspannung angelegt, derart, daß der erste Primärschwinger 306a gegenphasig zum zweiten Primärschwinger 306b schwingt, wie es durch Pfeile 340, die auf den Primärschwingern gezeichnet sind, dargestellt ist, so wird die translatorische, parallel zur y-Achse gerichtete Bewegung der Primärschwinger 306a und 306b über die Sekundärschwingeraufhängung 312 in eine translatorische Bewegung parallel zur x-Achse des ersten und des zweiten Sekundärschwingers 314a und 314b transformiert, wie es durch Pfeile 342 auf den Sekundärschwingern symbolisch dargestellt ist. Aus Fig. 3 ist es für Fachleute offensichtlich, daß die gegenphasige Bewegung der beiden Primärschwinger ebenfalls zu einer gegenphasigen Bewegung der beiden Sekundärschwinger führt.

Wenn der Drehratensensor 300 einer Drehung um eine zur y-Achse parallele Achse 344 unterworfen wird, so wird eine Coriolis-Kraft auf den ersten und den zweiten Sekundärschwinger 314a und 314b erzeugt, wie es durch die bekannte Notation 346 symbolisch dargestellt ist. Die Bewegungen des ersten und zweiten Sekundärschwingers 314a und 314b werden durch darunterliegende Erfassungselektroden 316 bzw. darunterliegende zusätzliche Elektroden 318 erfaßt, wobei der erste und der zweite Sekundärschwinger mit einer jeweils darunterliegenden Erfassungselektrode einen differentiellen, kapazitiven Detektor bilden. Einen Frequenzabgleich und eine Rückkopplung, wie es in Verbindung mit dem ersten Ausführungsbeispiel der vorliegenden Erfindung beschrieben worden ist, sind analog dazu mittels zusätzlicher Elektroden 318 möglich, falls es erforderlich ist.

Die Federbalken 304b sowie die Verankerungen 304a der Primärschwingeraufhängungen 304 erlauben eine Bewegung jedes Primärschwingers in der y-Richtung, während sie eine Bewegung in der Richtung, in der die Coriolis-Kraft wirkt, d.h. in der z-Richtung, verhindern, wenn ihre Querschnittsgeometrie entsprechend gestaltet ist, wie es bei den letzten Ausführungsbeispielen erläutert wurde. Die Federbalken 312b der Sekundärschwingeraufhängung 312 sind so gestaltet, daß sie die gewünschten Federeigenschaften in der lateralen Richtung, d.h. in der x-Richtung, erfüllen, wo hingegen sie in der z-Richtung sehr starr sind. Die Torsionsfedern 312a verhindern ein Verkippen der Elektrodengruppen 308 des Primärschwingers gegenüber den feststehenden Elektrodengruppen 310 und damit eine Rückwirkung der Meßgröße auf die Anregung, bzw. den Comb-Drive. Die Torsionsfedern 312a erlauben somit die Drehschwingung des Sekundärschwingers 314a und 314b, ohne die Sekundärschwingung auf die Primärschwinger 306a und 306b zurück zu übertragen.

Wie bei den beiden vorhergehenden Ausführungsbeispielen der vorliegenden Erfindung läßt sich feststellen, daß die Hauptoberflächen, d.h. die in Fig. 3 gezeichneten Oberflächen, sowohl des Primär- als auch des Sekundärschwingers in der x-y-Ebene angeordnet sind, wobei die Primärschwingung ebenfalls in dieser Ebene erzeugt wird. Damit wird durch eine Rotation des Sensors eine Coriolis-Kraft senkrecht zur x-y-Ebene erzeugt, weshalb auch hier keine vorstehenden Elemente notwendig sind.

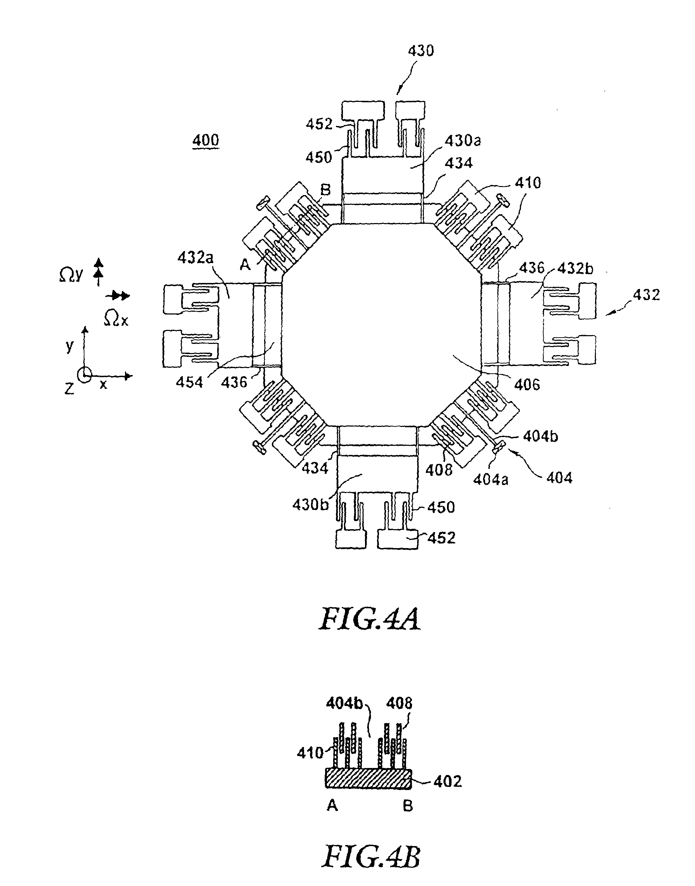

Fig. 4A zeigt eine Draufsicht eines Drehratensensors 400 gemäß einem vierten Ausführungsbeispiel der vorliegenden Erfindung, während Fig. 4B einen Querschnitt desselben entlang der Linie A - B darstellt. Der Drehratensensor 400 umfaßt einen Primärschwinger 406, der mittels einer Primärschwingeraufhängung 404, die aus vier Einheiten besteht, mit einem Grundkörper 402 verbunden ist. Eine Einheit der Primärschwingeraufhängung 404 umfaßt eine Verankerung 404a und einen Federbalken 404b. Die Verankerung ist mit dem Grundkörper 402 und mit dem Federbalken 404b verbunden, während der Federbalken die Verankerung und den Primärschwinger 406 verbindet. Der Primärschwinger 406 weist ferner vier Elektrodengruppen 108 auf, die in feststehende, d.h. mit dem Grundkörper 402 verbunden, Elektrodengruppen 410 eingreifen, um jeweils einen Comb-Drive zu bilden.

Ein Querschnitt eines Comb-Drives ist in Fig. 4B dargestellt. Die Besonderheit des in Fig. 4B im Querschnitt dargestellten Comb-Drives besteht darin, daß derselbe ein vertikaler Comb- Drive ist, durch den bei Vorhandensein einer geeigneten Wechselspannung der Primärschwinger in eine translatorische Schwingung in z-Richtung versetzt werden kann.

Die Federbalken 404b der Primärschwingeraufhängung 404 sind derart dimensioniert, daß sie eine Ablenkung in der z-Richtung zulassen, während sie gegenüber Kräften in der x-y-Ebene im wesentlichen steif sind.

Ein erster Sekundärschwinger 430, der aus einem ersten Teil 430a und aus einem zweiten Teil 430b besteht, ist mittels einer ersten Sekundärschwingeraufhängung 434 mit dem Primärschwinger 406 verbunden. Analog dazu ist ein zweiter Sekundärschwinger 432, der aus einem ersten Teil 432a und aus einem zweiten Teil 432b besteht, über eine zweite Sekundärschwingeraufhängung mit dem Primärschwinger 406 verbunden. Die erste Sekundärschwingeraufhängung 434 und die zweite Sekundärschwingeraufhängung 436 sind jeweils als Federbalken ausgeführt, die in der z-Richtung im wesentlichen steif sind, während sie in x- bzw. y-Richtung auslenkbar sind. Die ersten und zweiten Teile des ersten Sekundärschwingers und des zweiten Sekundärschwingers weisen ferner an ihren den Sekundärschwingeraufhängungen gegenüberliegenden Seiten jeweils eine Sekundärschwingerelektrodengruppe 450 auf, wobei jeder Sekundärschwingerelektrodengruppe 450 eine feststehende Erfassungselektrodengruppe 452 in der Art eines Comb-Drives gegenüberliegt. Das kammartige Ineinandergreifen der Sekundärschwingerelektrodengruppe 450 und der feststehenden Erfassungselektrodengruppe 452 ist derart ausgeführt, daß eine Verschiebung der Sekundärschwingerelektrodengruppe 450 parallel zur x-Achse durch eine Kapazitätsänderung der Kammanordnung erfaßbar ist.

Wie es in Fig. 4A zu sehen ist, ist die Symmetrieachse des ersten Sekundärschwingers 430 parallel zur y-Achse, während die Symmetrieachse des zweiten Sekundärschwingers 432 parallel zur x-Achse verläuft. Ferner weist der zweite Sekundärschwinger 432 analog zum ersten Sekundärschwinger 430 Sekundärschwingerelektrodengruppen und kammartig in dieselben eingreifende Erfassungselektrodengruppen auf, welche eine Verschiebung des Sekundärschwingers 432, d.h. des ersten und des zweiten Teils 432a und 432b des Sekundärschwingers 432, parallel zur y-Achse erfassen können. Optional ist unter dem Primärschwinger eine Primärschwingungserfassungselektrode 454 angeordnet, um die Primärschwingung kapazitiv zu erfassen bzw. dieselbe, wie es bereits beschrieben worden ist, abzugleichen. Die Bewegung in z-Richtung des Primärschwingers könnte als Alternative analog zu den ersten beiden Ausführungsbeispielen mit weiteren zusätzlichen vertikalen Comb-Drives zum Erfassen gemessen werden, die den Comb-Drives zum Treiben ähnlich sind. Dafür könnten einer oder zwei vertikale Comb-Drives eine kapazitive Erfassung ermöglichen. Optional könnte auch die Bewegung des Sekundärschwingers mittels vertikaler Comb-Drives erfaßt werden.

Wird der Drehratensensor 400 mit einer Winkelgeschwindigkeit Ω_{y} um eine Achse parallel zur Symmetrieachse des ersten Sekundärschwingers 430, die parallel zur y-Achse ist, gedreht, so wird aufgrund der translatorischen Primärbewegung des ersten Sekundärschwingers 430 in z-Richtung, die über die Sekundärschwingeraufhängung 434 von dem Primärschwinger 406 übertragen wird, eine Coriolis-Kraft bewirkt, die eine Bewegung des Sekundärschwingers 430 in x-Richtung veranlaßt, welche mittels der festen Erfassungselektrodengruppe 452 und der Primärschwingungserfassungselektrodengruppe 454 kapazitiv erfaßt werden kann. Analog dazu führt eine Drehung des Drehratensensors 400 um eine Achse parallel zur Symmetrieachse des zweiten Sekundärschwingers 432, die parallel zur x-Achse ist, zu einer Coriolis-Kraft auf den Sekundärschwinger 432, wodurch eine Bewegung des Sekundärschwingers 432 in y-Richtung hervorgerufen wird, die ebenfalls kapazitiv erfaßt wird. An dieser Stelle sei angemerkt, daß der erste Teil 430a des ersten Sekundärschwingers sowie der zweite Teil 430b des ersten Sekundärschwingers eine gleichphasige translatorische Bewegung ausführen, wie es auch für den ersten und den zweiten Teil 432a und 432b des zweiten Sekundärschwingers 432 der Fall ist. Ein Frequenzabgleich sowie eine Rückkopplung können, wie es im Zusammenhang mit dem ersten Ausführungsbeispiel der vorliegenden Erfindung beschrieben worden ist, gegebenenfalls mit Hilfe zusätzlicher kammartiger Elektroden parallel zu den eingezeichneten auf dem Sekundärschwinger mit entsprechenden feststehenden Gegenelektroden (in Fig. 4A nicht eingezeichnet) realisiert werden.

Alternativ zu dem vertikalen Comb-Drive-Antrieb, der durch die Primärschwingerelektrodengruppen 408 und durch entsprechende feststehende Elektrodengruppen 110 realisiert ist, kann der Primärschwinger 406 auch durch die Primärschwingungserfassungselektrode 454 kapazitiv angetrieben werden.

Wie bereits des öfteren angemerkt wurde, sind auch beim vierten Ausführungsbeispiel die Hauptoberflächen, d.h. die in Fig. 4A gezeichneten Oberflächen, sowohl des Primär- als auch der Sekundärschwingers in der x-y-Ebene angeordnet, wobei die Primärschwingung zwar senkrecht zu dieser Ebene erzeugt wird, die Sekundärschwingung jedoch in dieser Ebene stattfindet. Damit wird durch eine Rotation des Sensors eine Coriolis-Kraft senkrecht zur x-y-Ebene oder in der x-y-Ebene, d.h. der Hauptoberfläche der Schwinger, erzeugt, wobei auch hier keine vorstehenden Elemente zur Auslenkung des Sekundärschwingers notwendig sind.

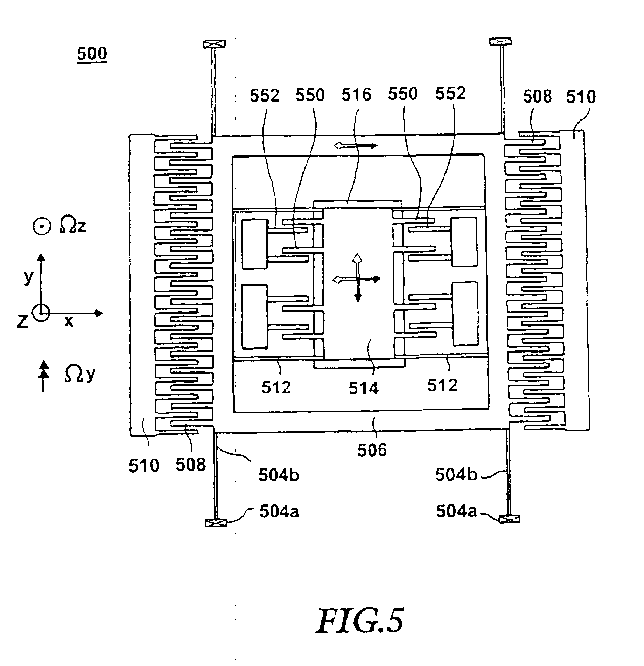

Fig. 5 zeigt einen Drehratensensor 500 gemäß einem fünften Ausführungsbeispiel der vorliegenden Erfindung. Ebenso wie die anderen im vorhergehenden beschriebenen Drehratensensoren weist der Drehratensensor 500 einen Primärschwinger 506 auf, der über eine Primärschwingeraufhängung 504, die aus vier Verankerungen 504a und vier Federbalken 504b besteht, an einem Grundkörper (nicht gezeigt) befestigt ist. Um den Primärschwinger zu erregen, d.h. in Schwingung zu versetzen, umfaßt derselbe auf zwei gegenüberliegenden Seiten jeweils eine Elektrodengruppe 508, die zu einer feststehenden Elektrodengruppe 510, d.h. zu einer mit dem Grundkörperverbundenen Elektrodengruppe 510, angeordnet ist, um einen Comb-Drive zu bilden, um den Primärschwinger 506 kapazitiv anzuregen. Die Primärschwingeraufhängung 504 ist derart ausgelegt, um eine Schwingung des Primärschwingers 506 in x-Richtung zuzulassen, während eine Bewegung des Primärschwingers 506 in den beiden anderen Richtungen wirksam vermieden wird. Die Federbalken 504b müssen daher einen rechteckigen Querschnitt aufweisen, wobei die schmale Seite des Querschnitts entlang der x-Richtung gewählt wird, während die lange Seite des Querschnitts entlang der z-Richtung verläuft. Auch hier sei angemerkt, daß zusätzlich zur Querschnittsgeometrie der Federbalken die anisotrope Steifigkeiten der Primär- und der Sekundärschwingeraufhängung auch durch die Anordnung mehrerer Federbalken mit gleichen Querschnittsgeometrien erreicht werden kann.

Ein Sekundärschwinger 514 ist über Sekundärschwingeraufhängungen 512 mit dem Primärschwinger 506 verbunden, wie es in Fig. 5 gezeigt ist. Der Sekundärschwinger 514 weist parallel zur x-Achse angeordnete Sekundärschwingerelektrodengruppen 550 auf, die in feststehende Sekundärschwingererfassungselektrodengruppen 552 kammartig ineinander eingreifend angeordnet sind, um eine kapazitive Erfassung der Bewegung des Sekundärschwingers 514 in x-Richtung zu ermöglichen.

Wird der Drehratensensor 500 mit einer Winkelgeschwindigkeit Ω_{y} um die Symmetrieachse des Sekundärschwingers 514, die parallel zur y-Achse ist, gedreht, so wirkt auf den Sekundärschwinger 514 eine Coriolis-Kraft, die zu einer im wesentlichen translatorischen Bewegung des Sekundärschwingers in z-Richtung führt. Die translatorische Bewegung des Sekundärschwingers 514 in der z-Richtung kann durch eine Erfassungselektrode 516, die unter dem Sekundärschwinger 514 angeordnet ist, analog zu den vorher beschriebenen Ausführungsbeispielen kapazitiv erfaßt werden.

Wird der Drehratensensor 500 mit einer Winkelgeschwindigkeit Ω_{z} um eine Achse, die senkrecht durch den Mittelpunkt des Sekundärschwingers 514 verläuft und zu der z-Achse parallel ist, gedreht, so wirkt auf den Sekundärschwinger eine Coriolis-Kraft, die eine Bewegung desselben in der y-Richtung veranlaßt. Diese Bewegung in der y-Richtung des Sekundärschwingers 514 stellt eine translatorische Schwingung dar, da auch der Primärschwinger eine translatorische Schwingung ausführt. Die Erfassung der Bewegung des Sekundärschwingers 514 in der y-Richtung findet auf kapazitivem Wege durch die Sekundärschwingerelektrodengruppe 550 und durch die feststehenden Erfassungselektrodengruppen 552 statt. Für Fachleute ist es offensichtlich, daß die Federbalken 512 eine im wesentlichen quadratische Querschnittskonfiguration aufweisen müssen, da sie eine Auslenkung sowohl in der z-Richtung als auch in der y-Richtung zulassen müssen. Eine Relativbewegung des Sekundärschwingers 514 und des Primärschwingers 506 wird durch die Anordnung der Federbalken 512 verhindert, die alle parallel zur x-Achse verlaufen. Dieses Ausführungsbeispiel kann jedoch auch als einachsiger Sensor mit einer Sekundärbewegung in y-Richtung mit dann rechteckigen Federbalkenquerschnitten ausgeführt werden.

Wie es bereits erwähnt wurde, stellt die Primärschwingeraufhängung sicher, daß der Primärschwinger 504 nicht durch die Coriolis-Kraft in y- oder z-Richtung bewegbar ist, da eine Bewegung des Primärschwingers in z-Richtung durch die Querschnittskonfiguration der Federbalken 504b unmöglich gemacht wird, wobei zusätzlich die Anordnung der Federbalken 504b parallel zur y-Achse eine Bewegung in y-Richtung des Primärschwingers verhindert. An dieser Stelle sei angemerkt, daß die Verankerungen 504a ebenfalls eine solche Steifigkeit besitzen müssen, damit sie keine Auslenkung in der y-Richtung erlauben.

Eine differentielle Messung der z-Bewegung des Sekundärschwingers ist mittels einer zweiten "Dekkelelektrode" möglich, welche in Fig. 5 jedoch nicht eingezeichnet ist. Diese Deckelelektrode ist im wesentlichen parallel zur Erfassungselektrode 516 angeordnet, wobei zwischen denselben der Sekundärschwinger 514 positioniert ist.

Schließlich sind auch beim fünften Ausführungsbeispiel die Hauptoberflächen, d.h. die in Fig. 5 gezeichneten Oberflächen, sowohl des Primär- als auch der Sekundärschwingers in der x-y-Ebene oder parallel zu derselben angeordnet, wobei die Primärschwingung in dieser Ebene erzeugt wird, und die Sekundärschwingung entweder ebenfalls in dieser Ebene oder senkrecht zu derselben stattfindet. Damit wird durch eine Rotation des Sensors eine Coriolis-Kraft senkrecht zur x-y-Ebene oder in der x-y-Ebene, d.h. der Hauptoberfläche der Schwinger, erzeugt, wobei auch hier keine vorstehenden Elemente zur Auslenkung des Sekundärschwingers notwendig sind.

In Abweichung von den vorher genannten Ausführungsbeispielen können insbesondere das zweite und das vierte Ausführungsbeispiel ein Vielzahl von Sekundärschwingern aufweisen, die unabhängig voneinander selektiv und digital auslesbar sind, wodurch durch Anzahl und Lage der gerade ausgelesenen Sekundärschwinger die Größe und Richtung auf digitale Art und Weise bestimmt werden können.

Zur Herstellung der Drehratensensoren gemäß der vorliegenden Erfindung werden vor allem mikromechanische Technologien verwendet. Bei der Realisierung der oben beschriebenen Ausführungsbeispiele ist teilweise die Herstellung von lateralen Kapazitäten erforderlich. Diese können mittels verschiedener Oberflächen-mikromechanischer Prozesse oder durch Bondverfahren hergestellt werden. Die beweglichen Strukturen der einzelnen Drehratensensoren können ferner durch andere mechanische Verfahren, wie z.B. Stanzen, Schneiden oder Sägen, oder auch durch Laser-Trennverfahren aus vorzugsweise elektrisch leitfähigem Material, wie z.B. Polysilizium, strukturiert werden. Die Verbindung der beweglichen Strukturen mit dem Grundkörper erfolgt dabei vorzugsweise vor der Strukturierung derselben.

Außerdem kann zur Herstellung der erfindungsgemäßen Drehratensensoren eine Vielzahl weiterer Herstellungsverfahren, wie z. B. Spritzguß, Galvanik oder Funkenerosion, vorteilhaft eingesetzt werden.

Schließlich sei darauf hingewiesen, daß durch die Verwendung von zwei räumlich getrennten Gelenken und Baugruppen für die beiden Schwingungsmoden eine Rückwirkung der Sekundärbewegung auf die Primärbewegung weitgehend verhindert wird. Im Gegensatz zu anderen, bekannten elektrostatisch angetriebenen Coriolis-Kraft-Drehratensensoren wird ein Verkippen bzw. eine unerwünschte, überlagerte Bewegung der Comb-Drive-Struktur verhindert. Meßfehler aufgrund einer Rückwirkung der Sekundärbewegung auf die Primärbewegung werden dadurch minimiert. Ferner ist, wie es beschrieben wurde, ein Abgleich der Eigenfrequenzen möglich. Auch für diesen Zweck ist die Entkopplung der beiden Schwingungsmoden wesentlich, wobei eine Verkippung des Comb-Drives verhindert werden muß, um eben diese wirksame Entkopplung zu ermöglichen.

## Patentansprüche

1. Drehratensensor (100; 200) zur Erfassung einer Drehung desselben, mit folgenden Merkmalen:
einem Grundkörper (102);
einem Primärschwinger (106; 206), der durch eine Anregung in eine Primärbewegung versetzbar ist;
einem Sekundärschwinger (114; 230, 232), der durch eine Coriolis-Kraft in eine Sekundärbewegung versetzbar ist, wobei sich Hauptoberflächen des Primärschwingers und des Sekundärschwingers im wesentlichen in der gleichen Ebene erstrecken und wobei die Primärbewegung des Primärschwingers in dieser Ebene liegt;
einer ersten Federeinrichtung (104; 204), die eine Primärschwingeraufhängung bildet und den Primärschwinger dem Grundkörper (102) gegenüber bewegbar hält;
einer von der ersten Federeinrichtung (104; 204) getrennten zweiten Federeinrichtung (112; 234, 236), die den Primärschwinger (106; 206) mit dem Sekundärschwinger (114; 230, 232) verbindet und eine Sekundärschwingeraufhängung bildet,
wobei die Drehung des Drehratensensors um eine erste Achse (y) erfaßbar ist;
wobei die Primärschwingeraufhängung derart ausgebildet ist, daß sie den Primärschwinger (106; 206) in Richtung der Primärbewegung, die um eine zweite Achse (z) gerichtet ist, führt, und den Primärschwinger (106; 206) dem Grundkörper (102) gegenüber um die zweite Achse (z) drehbar hält, wobei die zweite Achse (z) im wesentlichen senkrecht zu der ersten Achse (y) ist,
wobei die Sekundärschwingeraufhängung derart ausgebildet ist,
daß sie die Primärbewegung im wesentlichen starr auf den Sekundärschwinger (114; 230, 232) überträgt;
daß sie den Sekundärschwinger (114; 230, 232) in Richtung der Sekundärbewegung, die um eine dritte Achse (x) gerichtet ist, führt und den Sekundärschwinger (114; 230) gegenüber dem Primärschwinger um die dritte Achse (x) drehbar hält, wobei die dritte (x) Achse im wesentlichen senkrecht zu der ersten (y) und der zweiten (z) Achse ist, und
wobei die Torsionsfestigkeit der Primärschwingeraufhängung gegenüber einer Torsion um die dritte Achse (x) höher als die Torsionsfestigkeit der Sekundärschwingeraufhängung gegenüber einer Torsion um die dritte Achse (x) ist, so daß sie eine Rückübertragung der Sekundärbewegung auf den Primärschwinger (106; 206) im wesentlichen verhindert.

2. Drehratensensor (100; 200) gemäß Anspruch 1,
bei dem der Primärschwinger (106; 206) eine Mehrzahl von parallel zu der zweiten Achse (z) angeordneten Elektrodengruppen (108; 208) aufweist, die in eine Mehrzahl von feststehenden Elektrodengruppen (110; 210) eingreifen, damit durch Anlegen einer elektrischen Spannung zwischen den Elektrodengruppen des Primärschwingers und den feststehenden Elektrodengruppen eine Antriebskraft auf den Primärschwinger (106; 206) ausübbar ist.

3. Drehratensensor (100; 200) gemäß einem beliebigen der vorhergehenden Ansprüche,
bei dem die Primärschwingeraufhängung (104a, 104b; 204a, 204b) mindestens einen Federbalken (104b; 204b) aufweist, der durch eine Torsion um die zweite Achse (z) auslenkbar ist.

4. Drehratensensor (100; 200) gemäß Anspruch 3,
bei dem die Primärschwingeraufhängung (104a, 104b; 204a, 204b) ferner eine mit dem Grundkörper (102) verbundene Verankerung (104a; 204a) aufweist, an der die Mehrzahl von Federbalken (104b; 204b) befestigt ist, wobei das Symmetriezentrum der Aufhängung (104a; 204a) die zweite Achse (z) ist.

5. Drehratensensor (100) gemäß einem beliebigen der vorhergehenden Ansprüche,
bei dem die Sekundärschwingeraufhängung (112) eine Torsionsfeder ist, die eine Nachgiebigkeit gegenüber einer Torsion um die dritte Achse (x) aufweist.

6. Drehratensensor (100) gemäß Anspruch 5,
bei dem der Sekundärschwinger (114) eine im wesentlichen rechteckige Gestalt mit einer Ausnehmung aufweist, in der der ringförmige Primärschwinger (106) angeordnet ist.

7. Drehratensensor (100) gemäß Anspruch 5 oder 6,
bei dem die Torsionsfedern (112) im wesentlichen parallel zur dritten Achse (x) angeordnet sind, während die Federbalken (104b) zu der dritten Achse (x) einen Winkel bilden.

8. Drehratensensor (100) gemäß einem beliebigen der vorhergehenden Ansprüche,
bei dem auf einer Seite des Grundkörpers (102), die zu dem Sekundärschwinger (106) hin gerichtet ist, mindestens eine Erfassungselektrode (116) angeordnet ist, durch die eine Drehung des Sekundärschwingers um die dritte Achse (x) kapazitiv erfaßbar ist.

9. Drehratensensor (100) gemäß Anspruch 8,
bei dem eine durch die mindestens eine Erfassungselektrode (116a, 116b) erfaßte elektrische Spannung zu derselben rückgekoppelt wird, um die auf den Sekundärschwinger (114) wirkende Coriolis-Kraft bereichsweise zu kompensieren.

10. Drehratensensor (100) gemäß Anspruch 9,
bei dem durch Anlegen einer elektrischen Spannung an die mindestens eine auf dem Grundkörper angeordnete Erfassungselektrode (116) eine Eigenfrequenz des Sekundärschwingers (114) beeinflußt wird.

11. Drehratensensor (100) gemäß Anspruch 9 oder 10,
bei dem durch Anlegen einer elektrischen Spannung an mindestens eine zusätzliche, auf dem Grundkörper angeordnete Elektrode (118) die Eigenfrequenz des Sekundärschwingers (114) beeinflußt wird.

12. Drehratensensor (100; 200) gemäß einem beliebigen der Ansprüche 3 bis 12,
bei dem bestimmte Elektrodengruppen (108; 208) durch Primärschwinger (106; 206) und in dieselben eingreifende feste Elektrodengruppen (110; 210) zum Treiben des Primärschwingers (106; 206) verwendbar sind, während bestimmte Elektrodengruppen (108; 208) und in dieselben eingreifende feststehende Elektrodengruppen (110; 210) zum Erfassen der Drehung des Primärschwingers (106; 206) um die zweite Achse (z) verwendbar sind.

13. Drehratensensor (200) gemäß einem beliebigen der Ansprüche 1 bis 4,
bei dem der Sekundärschwinger (230) aus zwei Teilen (230a, 230b) besteht, wobei jeder Sekundärschwingerteil (230a, 230b) durch mindestens einen Federbalken (234) mit dem Primärschwinger (206) verbunden ist, wobei die Federbalken (234) durch ein Drehmoment um die zweite Achse (z) abbiegbar sind.

14. Drehratensensor (200) gemäß Anspruch 13,
der ferner mindestens einen weiteren Sekundärschwinger (232) aufweist, der aus zwei Teilen (232a, 232b) besteht, wobei jeder Teil des zweiten Sekundärschwingers (232) durch mindestens einen Federbalken (236) mit dem Primärschwinger (206) verbunden ist, wobei die Federbalken (236) durch ein Drehmoment um die zweite Achse (z) abbiegbar sind, um ferner einen Drehung des Drehratensensors (200) um die dritte Achse (x) zu erfassen.

15. Drehratensensor (300) zur Erfassung einer Drehung desselben, mit folgenden Merkmalen:
einem Grundkörper (102);
zwei Primärschwingern (306a, 306b), die durch eine Anregung in Primärbewegungen versetzbar sind, wobei die Primärbewegungen der zwei Primärschwinger gegenphasig zueinander sind;
zwei Sekundärschwingern (314a, 314b), die durch eine Coriolis-Kraft in Sekundärbewegungen versetzbar sind, wobei die Sekundärbewegungen der zwei Sekundärschwinger gegenphasig zueinander sind, wobei sich Hauptoberflächen der Primärschwinger und der Sekundärschwinger im wesentlichen in der gleichen Ebene erstrecken und wobei die Primärbewegungen der Primärschwinger in dieser Ebene liegen;
einer ersten Federeinrichtung (304), die eine Primärschwingeraufhängung bildet und die Primärschwinger dem Grundkörper (102) gegenüber bewegbar hält;
einer von der ersten Federeinrichtung (304) getrennten zweiten Federeinrichtung (312a, 312b), die die Primärschwinger (306a, 306b) mit den Sekundärschwingern (314a, 314b) verbindet und eine Sekundärschwingeraufhängung bildet,
wobei die Drehung des Drehratensensors um eine erste Achse (y) erfaßbar ist;
wobei die Primärschwingeraufhängung derart ausgebildet ist, daß sie die Primärschwinger (306a, 306b) in Richtung der Primärbewegungen führt, und die Primärschwinger (306a, 306b) dem Grundkörper gegenüber in der ersten Achse (y) im wesentlichen translatorisch bewegbar hält;
wobei die Sekundärschwingeraufhängung derart ausgebildet ist,
daß sie die translatorischen Primärbewegungen der Primärschwinger, die parallel zu der ersten Achse (y) gerichtet sind, in translatorische Bewegungen der Sekundärschwinger, die parallel zu der zweiten Achse (x) gerichtet sind, transformiert, wodurch die Primärbewegungen im wesentlichen starr auf die Sekundärschwinger (314a, 314b) übertragen werden; und
daß sie die Sekundärschwinger (314a, 314b) in Richtung der Sekundärbewegungen, die um die erste Achse (y) gerichtet sind, führt, und die Sekundärschwinger (314a, 314b) gegenüber den Primärschwingern in Richtung einer zweiten Achse (x) im wesentlichen translatorisch bewegbar und um die erste Achse (y) drehbar hält, wobei die zweite Achse (x) im wesentlichen senkrecht zu der ersten Achse (y) ist,
wobei die Torsionsfestigkeit der Primärschwingeraufhängung (304a, 304b) gegenüber einer Torsion um die erste Achse (y) höher als die Torsionsfestigkeit der Sekundärschwingeraufhängung (312a, 312b) gegenüber einer Torsion um die erste Achse (y) ist, so daß die Sekundärschwingeraufhängung eine Rückübertragung der Sekundärbewegungen auf die Primärschwinger (306a, 306b) im wesentlichen verhindert.

16. Drehratensensor (300) gemäß Anspruch 15,
bei dem jeder Primärschwinger eine Mehrzahl von parallel zu der ersten Achse (y) angeordneten Elektrodengruppen (308) aufweist, die in eine Mehrzahl von feststehenden Elektrodengruppen (310) eingreifen, damit durch Anlegen einer elektrischen Spannung zwischen den Elektrodengruppen des Primärschwingers und den entsprechenden feststehenden Elektrodengruppen eine gegenphasige Antriebskraft auf die Primärschwingerteile (306a, 306b) ausübbar ist.

17. Drehratensensor (300) gemäß Anspruch 15 oder 16,
bei dem die Primärschwingeraufhängung (304a, 304b) eine Mehrzahl von Federbalken (304b) aufweist, die durch eine Kraft in Richtung der ersten Achse (y) abbiegbar sind, und die mittels stabförmiger Verankerungen (304a) an dem Grundkörper befestigt sind.

18. Drehratensensor (300) gemäß einem beliebigen der Ansprüche 15 bis 17,
bei dem die Sekundärschwingeraufhängung (312a, 312b) folgende Merkmale aufweist:
zwei durch ein Drehmoment um die erste Achse (y) drehbare Torsionsfedern (312a); und
eine Mehrzahl von Federbalken (312b), wobei für jeden Sekundärschwingerteil (314a, 314b) zwei Federbalken (312b) vorgesehen sind, die durch ein Drehmoment um eine dritte Achse (z), die im wesentlichen senkrecht zu der ersten (y) und zu der zweiten Achse (x) ist, abbiegbar sind und wobei jeweils zwei Federbalken (312b) eine Torsionsfeder (312a) mit beiden Sekundärschwingerteilen (314a, 314b) verbindet.

19. Drehratensensor (400) zur Erfassung einer Drehung desselben, mit folgenden Merkmalen:
einem Grundkörper (402);
einem Primärschwinger (406), der durch eine Anregung in eine Primärbewegung versetzbar ist;
einem Sekundärschwinger (430, 432), der durch eine Coriolis-Kraft in eine Sekundärbewegung versetzbar ist, wobei sich Hauptoberflächen des Primärschwingers und des Sekundärschwingers im wesentlichen in der gleichen Ebene erstrecken, wobei die Primärbewegung des Primärschwingers senkrecht zu dieser Ebene ist, und wobei die Sekundärbewegung des Sekundärschwingers in dieser Ebene liegt;
einer ersten Federeinrichtung (404), die eine Primär-. schwingeraufhängung bildet und den Primärschwinger dem Grundkörper (402) gegenüber bewegbar hält;
einer von der ersten Federeinrichtung (404) getrennten zweiten Federeinrichtung (434, 436), die den Primärschwinger (406) mit dem Sekundärschwinger (430, 432) verbindet und eine Sekundärschwingeraufhängung bildet,
wobei die Drehung des Drehratensensors um eine erste Achse (y) erfaßbar ist,
wobei die Primärschwingeraufhängung derart ausgebildet ist, daß sie den Primärschwinger (406) in Richtung der Primärbewegung, die in Richtung einer zweiten Achse (z) gerichtet ist, führt, und den Primärschwinger (406) dem Grundkörper (402) gegenüber in Richtung der zweiten Achse (z), die im wesentlichen senkrecht zu der ersten Achse (y) ist, im wesentlichen linear bewegbar hält,
wobei die Sekundärschwingeraufhängung derart ausgebildet ist,
daß sie die Primärbewegung im wesentlichen starr auf den Sekundärschwinger (430) überträgt;
daß sie den Sekundärschwinger (430) in Richtung der Sekundärbewegung, die in Richtung einer dritten Achse (x) gerichtet ist, führt, und den Sekundärschwinger (430) gegenüber dem Primärschwinger in Richtung der dritten Achse (x), die im wesentlichen senkrecht zu der ersten (y) und zu der zweiten Achse (z) ist, im wesentlichen translatorisch bewegbar hält,
daß sie eine Rückübertragung der Sekundärbewegung auf den Primärschwinger (406) im wesentlichen verhindert
wobei die Primärschwingeraufhängung Federbalken aufweist, die eine Auslenkung in der zweiten Achse (z) zulassen und gegenüber einer Kraft in Richtung der ersten Achse (y) und der dritten Achse (x) im wesentlichen steif sind.

20. Drehratensensor (400) gemäß Anspruch 19,
bei dem der Primärschwinger (406) eine scheibenartige, mehreckige Form aufweist, wobei mehrere Elektrodengruppen (408) an Stirnseiten des Primärschwingers (406) angeordnet sind, die nicht parallel zu der ersten (y) oder dritten (x) Achse sind, und wobei ferner mehrere feststehende Elektrodengruppen (410) an dem Grundkörper (402) derart angeordnet sind, um jeweils in die Elektrodengruppe (408) des Primärschwingers (406) einzugreifen, damit der Primärschwinger (406) durch Anlegen einer Spannung zwischen den feststehenden Elektrodengruppen (410) und den Elektrodengruppen (408) des Primärschwingers (406) in einer Richtung parallel zu der zweiten Achse (z) bewegbar ist.

21. Drehratensensor (400) gemäß Anspruch 19 oder 20,
bei dem der Sekundärschwinger (430) zwei Teile aufweist, wobei jeder Teil (430a, 430b) ferner mit mindestens einer Sekundärschwingerelektrodengruppe (450) versehen ist, die in mindestens eine feststehende Erfassungselektrodengruppe (452) eingreift, um eine Bewegung jedes Sekundärschwingerteils (430a, 430b) parallel zu der dritten Achse (x) zu erfassen.

22. Drehratensensor (400) gemäß einem beliebigen der Ansprüche 19 bis 21,
bei dem die Primärschwingeraufhängung (404) eine Mehrzahl von Federbalken (404b) aufweist, die über eine Verankerung (404a) mit dem Grundkörper (402) verbunden und durch eine Kraft parallel zu der zweiten Achse (z) abbiegbar sind.

23. Drehratensensor (400) gemäß einem beliebigen der Ansprüche 20 bis 22,
bei dem die Sekundärschwingeraufhängung (434) mindestens einen Federbalken pro Sekundärschwingerteil (430a, 430b) aufweist, wobei die Federbalken aufgrund einer Kraft parallel zu der dritten Achse (x) abbiegbar sind, gegenüber einer Kraft parallel zu der zweiten Achse (z) jedoch im wesentlichen steif sind.

24. Drehratensensor (400) gemäß einem beliebigen der Ansprüche 19 bis 23,
der ferner symmetrisch zur ersten Achse (y) ein Paar von weiteren Sekundärschwingerteilen (432a, 432b) aufweist, die mittels weiterer Sekundärschwingeraufhängungen (436) in der ersten Richtung (y) auslenkbar an dem Primärschwinger (406) befestigt sind, um ferner eine Drehung des Drehratensensors (400) um die dritte Achse (x) zu erfassen.

25. Drehratensensor (500) zur Erfassung einer Drehung desselben um eine erste Achse (y) und eine dritte Achse (z), mit folgenden Merkmalen:
einem Grundkörper (402);
einem Primärschwinger (506), der durch eine Anregung in eine Primärbewegung versetzbar ist, die entlang einer zweiten Achse (x) gerichtet ist, wobei die erste Achse (y), die zweite Achse (x) und die dritte Achse (z) im wesentlichen senkrecht zueinander sind;
einem Sekundärschwinger (514), der durch eine Coriolis-Kraft in eine Sekundärbewegung versetzbar ist, die bei einer Drehung des Drehratensensors um die erste Achse (y) in Richtung der dritten Achse (z) gerichtet ist, und die bei einer Drehung des Drehratensensors um die dritte Achse (z) in Richtung der ersten Achse (y) gerichtet ist, wobei sich Hauptoberflächen des Primärschwingers und des Sekundärschwingers im wesentlichen in der gleichen Ebene erstrecken und wobei die Primärbewegung des Primärschwingers in dieser Ebene liegt;
einer ersten Federeinrichtung (504), die eine Primärschwingeraufhängung bildet und den Primärschwinger dem Grundkörper (402) gegenüber bewegbar hält;
einer von der ersten Federeinrichtung (504) getrennten zweiten Federeinrichtung (512), die den Primärschwinger (506) mit dem Sekundärschwinger (514) verbindet und eine Sekundärschwingeraufhängung bildet,
wobei die Primärschwingeraufhängung derart ausgebildet ist, daß sie eine Bewegung des Primärschwingers (506) in Richtung der zweiten Achse (x) zuläßt und eine Bewegung des Primärschwingers in Richtung der ersten Achse (y) und der dritten Achse (z) wirksam vermeidet, und
wobei die Sekundärschwingeraufhängung derart ausgebildet ist,
daß sie die Primärbewegung im wesentlichen starr auf den Sekundärschwinger (514) überträgt;
daß sie den Sekundärschwinger (514) in Richtung der Sekundärbewegung führt, wobei die Sekundärschwingeraufhängung eine translatorische Bewegung des Sekundärschwingers in Richtung der dritten Achse (z) und der ersten Achse (y) erlaubt; und
daß sie eine Rückübertragung der Sekundärbewegung auf den Primärschwinger (506) im wesentlichen verhindert,
wobei der Sekundärschwinger (514) mindestens eine Elektrodengruppe (550) aufweist, die in mindestens eine feststehende Elektrodengruppe (552) eingreift, um eine Bewegung des Sekundärschwingers parallel zu der ersten Achse (y) zu erfassen, und
wobei eine flächige Erfassungselektrode (516) auf dem Grundkörper und unter dem Sekundärschwinger (514) angeordnet ist, um eine translatorische Bewegung des Sekundärschwingers in Richtung der dritten Achse (z) zu erfassen.

26. Drehratensensor (500) gemäß Anspruch 25,
bei dem die Primärschwingeraufhängung (504a, 504b) eine Mehrzahl von in Richtung der zweiten Achse (x) bewegbaren Federbalken aufweist, die über Verankerungen (504a) mit dem Grundkörper verbunden sind.

27. Drehratensensor (500) gemäß Anspruch 26,
bei dem der Primärschwinger (506) mindestens eine Elektrodengruppe (508) aufweist, die in eine feststehende Elektrodengruppe (510) eingreift, um den Primärschwinger (506) kapazitiv parallel zu der zweiten Achse (x) zu bewegen.

28. Drehratensensor (500) gemäß Anspruch 26 oder 27,
bei dem der Primärschwinger (506) eine Ausnehmung aufweist, in der der Sekundärschwinger (514) mittels der Sekundärschwingeraufhängung (512) positioniert ist.

29. Drehratensensor (500) gemäß einem beliebigen der Ansprüche 26 bis 28,
bei dem die Sekundärschwingeraufhängung (512) eine Mehrzahl von Federbalken aufweist, die parallel zu der zweiten Achse (x) angeordnet sind und den Primärschwinger (506) mit dem Sekundärschwinger (514) verbinden, wobei die Federbalken ferner einen im wesentlichen quadratischen Querschnitt aufweisen, um eine Auslenkung in Richtung der dritten Achse (z) oder in Richtung der ersten Achse (y) als Reaktion auf eine Coriolis-Kraft aufgrund einer Drehung um die erste Achse (y) bzw. um die dritte Achse (z) zuzulassen.

30. Drehratensensor (100; 200; 400) gemäß Anspruch 1, 13 oder 19,
bei dem eine Mehrzahl von Sekundärschwingern vorhanden ist, wobei dieselben jeweils selektiv auslesbar sind, um Größe und Richtung der Drehrate zu erfassen.

## Claims

1. Rotational rate gyroscope (100; 200) for the detection of rotation thereof, comprising:
a base member (102);
a primary oscillator (106; 206;) adapted to be excited to perform a primary movement;
a secondary oscillator (114; 230, 232) adapted to be caused, by a Coriolis force, to perform a secondary movement, with major surfaces of the primary oscillator and the secondary oscillator extending substantially in the same plane, and the primary movement of the primary oscillator taking place in this plane;
a first spring means (104; 204) constituting a primary oscillator suspension and holding the primary oscillator so as to be movable with respect to the base member (102);
a second spring means (112; 234, 236) separate from the first spring means (104; 204) and connecting the primary oscillator (106; 206) to the secondary oscillator (114; 230, 232) and constituting a secondary oscillator suspension,
wherein the rotation of the rotational rate gyroscope is detectable around a first axis (y);
wherein the primary oscillator suspension is designed such that it moves the primary oscillator (106; 206) in the direction of the primary movement that is directed about a second axis (z), and holds the primary oscillator (106; 206) so as to be rotatable about the second axis (z) with respect to the base member (102), the second axis (z) being substantially perpendicular to the first axis (y),
wherein the secondary oscillator suspension is designed such
that it transfers the primary movement to the secondary oscillator (114; 230, 232) in a substantially rigid manner;
that it moves the secondary oscillator (114; 230, 232) in the direction of the secondary movement that is directed about a third axis (x), and holds the secondary oscillator (114; 230) so as to be rotatable about the third axis (x), the third axis (x) being substantially perpendicular to the first axis (y) and the second axis (z); and
wherein the torsional strength of the primary oscillator suspension with respect to torsion about the third axis (x) is higher than the torsional strength of the secondary oscillator suspension with respect to torsion about the third axis (x), so that it substantially prevents a transfer of the secondary movement back to the primary oscillator (106; 206).

2. Rotational rate gyroscope (100; 200) according to claim 1,
wherein the primary oscillator (106; 206) comprises a plurality of electrode groups (108; 208) arranged parallel to the second axis (z) and engaging with a plurality of fixed electrode groups (110; 210) so that, by applying an electrical voltage between the electrode groups of the primary oscillator and the fixed electrode groups, a driving force can be exerted on the primary oscillator (106; 206).

3. Rotational rate gyroscope (100; 200) according to any of the preceding claims,
wherein the primary oscillator suspension (104a, 104b; 204a, 204b) comprises at least one spring beam (104b; 204b) that can be deflected by torsion about the second axis (z).

4. Rotational rate gyroscope (100; 200) according to claim 3,
wherein the primary oscillator suspension (104a, 104b; 204a, 204b) further comprises an anchoring means (104a; 204a) connected to the base member (102) and having the plurality of spring beams (104b; 204b) attached thereto, with the center of symmetry of the suspension (104a; 204a) being the second axis (z).

5. Rotational rate gyroscope (100) according to any of the preceding claims,
wherein the secondary oscillator suspension (112) is a torsion spring exhibiting resilience with respect to torsion about the third axis (x).

6. Rotational rate gyroscope (100) according to claim 5,
wherein the secondary oscillator (114) is of substantially rectangular configuration having a recess in which the ring-shaped primary oscillator (106) is disposed.

7. Rotational rate gyroscope (100) according to claim 5 or 6,
wherein the torsion springs (112) are disposed substantially parallel to the third axis (x), whereas the spring beams (104b) form an angle with respect to the third axis (x).

8. Rotational rate gyroscope (100) according to any of the preceding claims,
wherein on a side of the base member (102) directed towards the secondary oscillator (106) at least one sensing electrode (116) is disposed by which a rotation of the secondary oscillator about the third axis (x) can be capacitively detected.

9. Rotational rate gyroscope (100) according to claim 8,
wherein an electrical voltage detected by the at least one sensing electrode (116a, 116b) is fed back to the same in order to compensate portions of the Coriolis force acting on the secondary oscillator (114).

10. Rotational rate gyroscope (100) according to claim 9,
wherein by applying an electrical voltage to the at least one sensing electrode (116) disposed on the base member an intrinsic frequency of the secondary oscillator (114) is influenced.

11. Rotational rate gyroscope (100) according to claim 9 or 10,
wherein by applying an electrical voltage to at least one additional electrode (118) disposed on the base member the intrinsic frequency of the secondary oscillator (114) is influenced.

12. Rotational rate gyroscope (100; 200) according to any of claims 3 to 11,
wherein specific electrode groups (108; 208), by means of primary oscillators (106; 206) and fixed electrode groups (110; 210) engaging therewith, can be used for driving the primary oscillator (106; 206), while specific electrode groups (108; 208) and fixed electrode groups (110; 210) engaging therewith can be used for detecting the rotation of the primary oscillator (106; 206) about the second axis (z).

13. Rotational rate gyroscope (200) according to any of claims 1 to 4,
wherein the secondary oscillator (230) consists of two parts (230a, 230b), each secondary oscillator part (230a, 230b) being connected to the primary oscillator (206) by at least one spring beam (234), the spring beams (234) being deflectable by torque about the second axis (z).

14. Rotational rate gyroscope (200) of claim 13,
further comprising at least one further secondary oscillator (232) consisting of two parts (232a, 232b), each part of the second secondary oscillator (232) being connected to the primary oscillator (206) by means of at least one spring beam (236), the spring beams (236) being deflectable by torque about the second axis (z) in order to detect, furthermore, rotation of the rotational rate gyroscope (200) about the third axis (x).

15. Rotational rate gyroscope (300) for the detection of rotation thereof, comprising:
a base member (102);
two primary oscillators (306a, 306b) adapted to be excited to perform primary movements, the primary movements of the two primary oscillators being of opposite phase to each other;
two secondary oscillators (314a, 314b) adapted to be excited to perform secondary movements by a Coriolis force, the secondary movements of the two secondary oscillators being of opposite phase to each other, with major surfaces of the primary oscillators and the secondary oscillators extending substantially in the same plane and the primary movements of the primary oscillators taking place in this plane;
a first spring means (304) constituting a primary oscillator suspension and holding the primary oscillators so as to be movable with respect to the base member (102);
a second spring means (312a, 312b) separate from the first spring means (304) and connecting the primary oscillators (306a, 206b) to the secondary oscillators (314a, 314b) and constituting a secondary oscillator suspension,
wherein the rotation of the rotational rate gyroscope is detectable around a first axis (y);
wherein the primary oscillator suspension is designed such that it moves the primary oscillators (306a, 306b) in the direction of the primary movements, and holds the primary oscillators (306a, 306b) so as to be movable in translation in the first axis (y) with respect to the base member;
wherein the secondary oscillator suspension is designed such
that it transforms the translational primary movements of the primary oscillators directed parallel to the first axis (y) into translational movements of the secondary oscillators directed parallel to the second axis (x), whereby the primary movements are transferred to the secondary oscillators (314a, 314b) in a substantially rigid manner; and
that it moves the secondary oscillators (314a, 314b) in the direction of the secondary movements that are directed about a first axis (y), and holds the secondary oscillators (314a, 314b) so as to be substantially translationally movable in the direction of a second axis (x) with respect to the primary oscillators and rotatable about the first axis (y), the second axis (x) being substantially perpendicular to the first axis (y),
wherein the torsional strength of the primary oscillator suspension (304a, 304b) with respect to torsion about the first axis (y) is higher than the torsional strength of the secondary oscillator suspension (312a, 312b) with respect to torsion about the first axis (y), so that the secondary oscillator suspension substantially prevents a transfer of the secondary movements back to the primary oscillators (306a; 306b).

16. Rotational rate gyroscope (300) according to claim 15,
wherein each primary oscillator has a plurality of electrode groups (308) arranged parallel to the first axis (y) and engaging with a plurality of fixed electrode groups (310) so that, by applying an electrical voltage between the electrode groups of the primary oscillator and the corresponding fixed electrode groups, a driving force of opposite phase can be exerted on the primary oscillator parts (306a, 306b).

17. Rotational rate gyroscope (300) according to claim 15 or 16,
wherein the primary oscillator suspension (304a, 304b) comprises a plurality of spring beams (304b), which are deflectable by a force in the direction of the first axis (y) and attached to the base member by means of rod-like anchoring means (304a).

18. Rotational rate gyroscope (300) according to any of claims 15 to 17,
wherein the secondary oscillator suspension (312a, 312b) comprises:
two torsion springs (312a) rotatable by torque about the first axis (y); and
a plurality of spring beams (312b), wherein for each secondary oscillator part (314a, 314b) two spring beams (312b) are provided that are deflectable by torque about a third axis (z) substantially normal to the first (y) and second axes (x), and wherein two spring beams (312b) each are connected by one torsion spring (312a) to both secondary oscillator parts (314a, 314b).

19. Rotational rate gyroscope (400) for the detection of a rotation thereof, comprising:
a base member (402);
a primary oscillator (406) adapted to be excited to perform a primary movement;
a secondary oscillator (430, 432) adapted to be caused, by a Coriolis force, to perform a secondary movement, with major surfaces of the primary oscillator and the secondary oscillator extending substantially in the same plane, with the primary movement of the primary oscillator being perpendicular to this plane, and with the secondary movement of the secondary oscillator taking place in this plane;
a first spring means (404) constituting a primary oscillator suspension and holding the primary oscillator so as to be movable with respect to the base member (402);
a second spring means (434, 436) separate from the first spring means (404) and connecting the primary oscillator (406) to the secondary oscillator (430, 432) and constituting a secondary oscillator suspension,
wherein the rotation of the rotational rate gyroscope is detectable around a first axis (y);
wherein the primary oscillator suspension is designed such that it moves the primary oscillator (406) in the direction of the primary movement that is directed in the direction of a second axis (z), and holds the primary oscillator (406) so as to be substantially linearly movable in the direction of the second axis (z) substantially perpendicular to the first axis (y) with respect to the base member (402),
wherein the secondary oscillator suspension is designed such
that it transfers the primary movement to the secondary oscillator (430) in a substantially rigid manner;
that it moves the secondary oscillator (430) in the direction of the secondary movement that is directed in the direction of a third axis (x), and holds the secondary oscillator (430) so as to be substantially translationally movable in the direction of the third axis (x) substantially perpendicular to the first (y) and the second axis (z) with respect to the primary oscillator,
that it substantially prevents a transfer of the secondary movement back to the primary oscillator (406),
wherein the primary oscillator suspension comprises spring beams allowing deflection in the second axis (z) and being substantially rigid with respect to a force in the direction of the first axis (y) and the third axis (x).

20. Rotational rate gyroscope (400) according to claim 19,
wherein the primary oscillator (406) is of disc-shaped, polygonal configuration, with several electrode groups (408) being disposed on face sides of the primary oscillator (406) that are not parallel to the first (y) or third (x) axis, and furthermore with several fixed electrode groups (410) being arranged on the base member (402) so as to engage with the respective electrode group (408) of the primary oscillator (406), so that the primary oscillator (406) is movable in a direction parallel to the second axis (z) by applying a voltage between the fixed electrode groups (410) and the electrode groups (408) of the primary oscillator (406).

21. Rotational rate gyroscope (400) according to claim 19 or 20,
wherein the secondary oscillator (430) comprises two parts, each part (430a, 430b) further being provided with at least one secondary oscillator electrode group (450) in engagement with at least one fixed sensing electrode group (452) in order to detect movement of each secondary oscillator part (430a, 430b) parallel to the third axis (x).

22. Rotational rate gyroscope (400) according to any of claims 19 to 21,
wherein the primary oscillator suspension (404) comprises a plurality of spring beams (404b) connected to the base member (402) via an anchoring means (404a) and deflectable by a force parallel to the second axis (z).

23. rotational rate gyroscope (400) according to any of claims 20 to 22,
wherein the secondary oscillator suspension (434) comprises at least one spring beam per secondary oscillator part (430a, 430b), the spring beams being deflectable by a force parallel to the third axis (x), but being substantially rigid with respect to a force parallel to the second axis (z).

24. Rotational rate gyroscope (400) according to any of claims 19 to 23,
further comprising a pair of further secondary oscillator parts (432a, 432b) symmetrical to the first axis (y), which, by means of further secondary oscillator suspensions (436) are attached to the primary oscillator (406) so as to be deflectable in the first direction (y), so as to further detect rotation of the rotational rate gyroscope (400) about the third axis (x).

25. Rotational rate gyroscope (500) for the detection of a rotation thereof about a first axis (y) and a third axis (z), comprising:
a base member (402);
a primary oscillator (506) adapted to be excited to perform a primary movement directed along a second axis (x), the firs axis (y), the second axis (x) and the third axis (z) being substantially perpendicular to each other;
a secondary oscillator (514) adapted to be caused, by a Coriolis force, to perform a secondary movement directed in the direction of the third axis (z) on rotation of the rotational rate gyroscope about the first axis (y) and directed in the direction of the first axis (y) on rotation of the rotational rate gyroscope about the third axis (z), with major surfaces of the primary oscillator and the secondary oscillator extending substantially in the same plane and the primary movement of the primary oscillator taking place in this plane;
a first spring means (504) constituting a primary oscillator suspension and holding the primary oscillator so as to be movable with respect to the base member (402);
a second spring means (512) separate from the first spring means (504) and connecting the primary oscillator (506) to the secondary oscillator (514) and constituting a secondary oscillator suspension,
wherein the primary oscillator suspension is designed such that it allows a movement of the primary oscillator (506) in the direction of the second axis (x) and effectively prevents a movement of the primary oscillator in the direction of the first axis (y) and the third axis (z), and
wherein the secondary oscillator suspension is designed such
that it transfers the primary movement to the secondary oscillator (514) in a substantially rigid manner;
that it moves the secondary oscillator (514) in the direction of the secondary movement, wherein the secondary oscillator suspension allows a translational movement of the secondary oscillator in the direction of the third axis (z) and the first axis (y); and
that it substantially prevents a transfer of the secondary movement back to the primary oscillator (506),
wherein the secondary oscillator (514) comprises at least one electrode group (550) which is in engagement with at least one fixed electrode group (552) so as to detect a movement of the secondary oscillator parallel to the first axis (y), and
wherein a sheet-like sensing electrode (516) is disposed on the base member and below the secondary oscillator (514) in order to detect a translational movement of the secondary oscillator in the direction of the third axis (z).

26. Rotational rate gyroscope (500) according to claim 25,
wherein the primary oscillator suspension (504a, 504b) comprises a plurality of spring beams movable in the direction of the second axis (x) and connected to the base member via anchoring means (504a).

27. Rotational rate gyroscope (500) according to claim 26,
wherein the primary oscillator (506) comprises at least one electrode group (508) which engages with a fixed electrode group (510) in order to capacitively move the primary oscillator (506) parallel to the second axis (x).

28. Rotational rate gyroscope (500) according to claim 26 or 27,
wherein the primary oscillator (506) comprises a recess in which the secondary oscillator (514) is positioned by means of the secondary oscillator suspension (512).

29. Rotational rate gyroscope (500) according to any of claims 26 to 28,
wherein the secondary oscillator suspension (512) comprises a plurality of spring beams disposed parallel to the second axis (x) and connecting the primary oscillator (506) to the secondary oscillator (514), the spring beams further being of substantially square cross-section in order to permit deflection in the direction of the third axis (z) or in the direction of the first axis (y) as a reaction to a Coriolis force due to rotation about the first axis (y) and the third axis (z), respectively.

30. The rotational rate gyroscope (100; 200; 400) according to claim 1, 13 or 19,
wherein a plurality of secondary oscillators is provided, wherein they can each be read out selectively in order to detect the quantity and direction of the rotational rate.

## Revendications

1. Détecteur de vitesse de rotation (100; 200) destiné à détecter une rotation de celui-ci, aux caractéristiques suivantes:
un corps de base (102);
un oscillateur primaire (106; 206) pouvant être déplacé, par une excitation, selon un mouvement primaire;
un oscillateur secondaire (114; 230, 232) pouvant être déplacé, par une force de Coriolis, selon un mouvement secondaire, les surfaces principales de l'oscillateur primaire et de l'oscillateur secondaire s'étendant sensiblement dans le même plan et le mouvement primaire de l'oscillateur primaire se situant dans ce plan;
un premier dispositif ressort (104; 204) formant une suspension d'oscillateur primaire et maintenant l'oscillateur primaire mobile par rapport au corps de base (102);
un second dispositif ressort (112; 234, 236), séparé du premier dispositif ressort (104; 204), reliant l'oscillateur primaire (106; 206) à l'oscillateur secondaire (114; 230, 232) et formant une suspension d'oscillateur secondaire,
la rotation du détecteur de vitesse de rotation autour d'un premier axe (y) pouvant être captée ;
la suspension d'oscillateur primaire étant réalisée de sorte qu'elle guide l'oscillateur primaire (106; 206) en direction du mouvement primaire qui est orienté autour d'un second axe (z) et maintient l'oscillateur primaire (106; 206) rotatif autour du second axe (z) par rapport au corps de base (102), le second axe (z) étant sensiblement perpendiculaire au premier axe (y),
la suspension d'oscillateur secondaire est réalisée de sorte
qu'elle transmet le mouvement primaire sensiblement rigidement à l'oscillateur secondaire (114; 230, 232);
qu'elle guide l'oscillateur secondaire (114; 230, 232) en direction du mouvement secondaire qui est orienté autour d'un troisième axe (x) et
maintient l'oscillateur secondaire (114; 230) rotatif autour du troisième axe (x) par rapport à l'oscillateur primaire, le troisième axe (x) étant sensiblement perpendiculaire au premier axe (y) et au second axe (z); et la résistance à la torsion de la suspension d'oscillateur primaire à une torsion autour du troisième axe (x) étant supérieure à la résistance à la torsion de la suspension d'oscillateur secondaire à une torsion autour du troisième axe (x), de sorte qu'elle empêche substantiellement une transmission réactive du mouvement secondaire à l'oscillateur primaire (106; 206).

2. Détecteur de vitesse de rotation (100; 200) suivant la revendication 1, dans lequel l'oscillateur primaire (106; 206) présente une pluralité de groupes d'électrodes (108; 208), disposés parallèles au second axe (z), qui s'emboîtent dans une pluralité de groupes d'électrodes fixes (110; 210), pour que, par l'application d'une tension électrique entre les groupes d'électrodes de l'oscillateur primaire et les groupes d'électrodes fixes, puisse être exercée une force d'entraînement sur l'oscillateur primaire (106; 206).

3. Détecteur de vitesse de rotation (100; 200) suivant l'une quelconque des revendications précédentes, dans lequel la suspension d'oscillateur primaire (104a, 104b; 204a, 204b) présente au moins une poutre élastique (104b; 204b) pouvant être déplacée latéralement par une torsion autour du second axe (z).

4. Détecteur de vitesse de rotation (100; 200) suivant la revendication 3, dans lequel la suspension d'oscillateur primaire (104a, 104b; 204a, 204b) présente, par ailleurs, un ancrage (104a; 204a) relié au corps de base (102) auquel sont fixées la pluralité de poutres élastiques (104b; 204b), le centre de symétrie de la suspension (104a; 204a) étant le second axe (z).

5. Détecteur de vitesse de rotation (100) suivant l'une quelconque des revendications précédentes, dans lequel la suspension d'oscillateur secondaire (112) est un ressort de torsion présentant une élasticité par rapport à une torsion autour du troisième axe (x).

6. Détecteur de vitesse de rotation (100) suivant la revendication 5, dans lequel l'oscillateur secondaire (114) présente une forme sensiblement rectangulaire avec un évidement dans lequel est disposé l'oscillateur primaire annulaire (106).

7. Détecteur de vitesse de rotation (100) suivant la revendication 5 ou 6, dans lequel les ressorts de torsion (112) sont disposés sensiblement parallèles au troisième axe (x), tandis que les poutres élastiques (104b) forment un angle avec le troisième axe (x).

8. Détecteur de vitesse de rotation (100) suivant l'une quelconque des revendications précédentes, dans lequel sur un côté du corps de base (102) orienté vers l'oscillateur secondaire (106) est disposée au moins une électrode de détection (116) par laquelle peut être détectée capacitivement une rotation de l'oscillateur secondaire autour du troisième axe (x).

9. Détecteur de vitesse de rotation (100) suivant la revendication 8, dans lequel une tension électrique captée par l'au moins une électrode de détection (116a, 116b) est couplée de manière réactive à cette dernière, afin de compenser par endroits la force de Coriolis agissant sur l'oscillateur secondaire (114).

10. Détecteur de vitesse de rotation (100) suivant la revendication 9, dans lequel par l'application d'une tension électrique sur l'au moins une électrode de détection (116) disposée sur le corps de base est influencée une fréquence propre de l'oscillateur secondaire (114).

11. Détecteur de vitesse de rotation (100) suivant la revendication 9 ou 10, dans lequel par l'application d'une tension électrique sur au moins une électrode supplémentaire (118) disposée sur le corps de base est influencée la fréquence propre de l'oscillateur secondaire (114).

12. Détecteur de vitesse de rotation (100; 200) suivant l'une quelconque des revendications 3 à 12, dans lequel des groupes d'électrodes (108; 208) déterminés de l'oscillateur primaire (106; 206) et des groupes d'électrodes fixes (110; 210) s'emboîtant dans ces derniers peuvent être utilisés pour l'entraînement de l'oscillateur primaire (106; 206), tandis que des groupes d'électrodes (108; 208) déterminés et des groupes d'électrodes fixes (110; 210) s'emboîtant dans ces derniers peuvent être utilisés pour détecter la rotation de l'oscillateur primaire (106; 206) autour du second axe (z).

13. Détecteur de vitesse de rotation (200) suivant l'une quelconque des revendications 1 à 4, dans lequel l'oscillateur secondaire (230) se compose de deux éléments (230a, 230b), chaque élément d'oscillateur secondaire (230a, 230b) étant relié, par au moins une poutre élastique (234), à l'oscillateur primaire (206), les poutres élastiques (234) pouvant être déviées, par un couple, autour du second axe (z).

14. Détecteur de vitesse de rotation (200) suivant la revendication 13, présentant, par ailleurs, au moins un autre oscillateur secondaire (232) composé de deux éléments (232a, 232b), chaque élément du second oscillateur secondaire (232) étant relié, par au moins une poutre élastique (236) à l'oscillateur primaire (206), les poutres élastiques (236) pouvant être déviées, par un couple, autour du second axe (z), pour détecter, par ailleurs, une rotation du détecteur de vitesse de rotation (200) autour du troisième axe (x).

15. Détecteur de vitesse de rotation (300), destiné à détecter une rotation de celui-ci, aux caractéristiques suivantes:
un corps de base (102);
deux oscillateurs primaires (306a; 306b) pouvant être déplacés, par une excitation, selon des mouvements primaires, les mouvements primaires des deux oscillateurs primaires étant de phase opposée l'un à l'autre;
deux oscillateurs secondaires (314a; 314b) pouvant être déplacés, par une force de Coriolis, selon des mouvements secondaires, les mouvements secondaires des deux oscillateurs secondaires étant de phase opposée l'un à l'autre, les surfaces principales des oscillateurs primaires et des oscillateurs secondaires s'étendant sensiblement dans le même plan et les mouvements primaires des oscillateurs primaires se situant dans ce plan;
un premier dispositif ressort (304) formant une suspension d'oscillateur primaire et maintenant l'oscillateur primaire mobile par rapport au corps de base (102);
un second dispositif ressort (312a, 312b), séparé du premier dispositif ressort (304), reliant l'oscillateur primaire (306a, 306b) aux oscillateurs secondaires (314a, 314b) et formant une suspension d'oscillateur secondaire,
la rotation du détecteur de vitesse de rotation autour d'un premier axe (y) pouvant être captée ;
la suspension d'oscillateur primaire étant réalisée de sorte qu'elle guide les oscillateurs primaires (306a, 306b) en direction des mouvements primaires et maintient les oscillateurs primaires (306a, 306b) sensiblement mobiles en translation selon le premier axe (y) par rapport au corps de base (102);
la suspension d'oscillateur secondaire est réalisée de sorte
qu'elle transforme les mouvements de translation primaires des oscillateurs primaires orientés parallèlement au premier axe (y) en mouvements de translation des oscillateurs secondaires orientés parallèlement au second axe (x), d'où les mouvements primaires sont transmis de manière sensiblement rigide aux oscillateurs secondaires (314a, 314b) ; et
qu'elle guide les oscillateurs secondaires (314a, 314b) en direction des mouvements secondaires qui sont orientés autour du premier axe (y) et maintient les oscillateurs secondaires (314a, 314b) sensiblement mobiles en translation selon un second axe (x) et rotatifs autour du premier axe (y) par rapport aux oscillateurs primaires, le second axe (x) étant sensiblement perpendiculaire au premier axe (y),
la résistance à la torsion de la suspension d'oscillateur primaire (304a, 304b) à une torsion autour du premier axe (y) étant supérieure à la résistance à la torsion de la suspension d'oscillateur secondaire (312a, 312b) à une torsion autour du premier axe (y), de sorte que la suspension d'oscillateur secondaire empêche substantiellement une transmission réactive des mouvements secondaires aux oscillateurs primaires (306a, 306b).

16. Détecteur de vitesse de rotation (300) suivant la revendication 15, dans lequel chaque oscillateur primaire présente une pluralité de groupes d'électrodes (308), disposés parallèles au premier axe (y), qui s'emboîtent dans une pluralité de groupes d'électrodes fixes (310), pour que, par l'application d'une tension électrique entre les groupes d'électrodes de l'oscillateur primaire et les groupes d'électrodes fixes, puisse être exercée une force d'entraînement en phase opposée sur les éléments d'oscillateur primaire (306a, 306b).

17. Détecteur de vitesse de rotation (300) suivant la revendication 15 ou 16, dans lequel la suspension d'oscillateur primaire (304a, 304b) présente une pluralité de poutres élastiques (304b) pouvant être déviées par une force dans la direction du premier axe (y) et qui sont fixées, à l'aide d'ancrages (304a) en forme de barres, au corps de base.

18. Détecteur de vitesse de rotation (300) suivant l'une quelconque des revendications 15 à 17, dans lequel la suspension d'oscillateur secondaire (312a, 312b) présente les caractéristiques suivantes:
deux ressorts de torsion (312a) rotatifs autour du premier axe (y) par un couple; et
une pluralité de poutres élastiques (312b), pour chaque élément d'oscillateur secondaire (314a, 314b) étant prévues deux poutres élastiques (312b) pouvant être déviées, par un couple, autour d'un troisième axe (z) sensiblement perpendiculaire au premier (y) et au second axe (x) et chaque fois deux poutres élastiques (312b) reliant un ressort de torsion (312a) aux deux éléments d'oscillateur secondaire (314a, 314b).

19. Détecteur de vitesse de rotation (400) destiné à détecter une rotation de celui-ci, aux caractéristiques suivantes:
un corps de base (402);
un oscillateur primaire (406) pouvant être déplacé, par une excitation, selon un mouvement primaire;
un oscillateur secondaire (430, 432) pouvant être déplacé, par une force de Coriolis, selon un mouvement secondaire, les surfaces principales de l'oscillateur primaire et de l'oscillateur secondaire s'étendant sensiblement dans le même plan, le mouvement primaire de l'oscillateur primaire étant perpendiculaire à ce plan et le mouvement secondaire de l'oscillateur secondaire se situant dans ce plan;
un premier dispositif ressort (404) formant une suspension d'oscillateur primaire et maintenant l'oscillateur primaire mobile par rapport au corps de base (402);
un second dispositif ressort (434, 436), séparé du premier dispositif ressort (404), reliant l'oscillateur primaire (406) à l'oscillateur secondaire (430, 432) et formant une suspension d'oscillateur secondaire,
la rotation du détecteur de vitesse de rotation autour d'un premier axe (y) pouvant être captée ;
la suspension d'oscillateur primaire étant réalisée de sorte qu'elle guide l'oscillateur primaire (406) en direction du mouvement primaire qui est orienté autour d'un second axe (z) et maintient l'oscillateur primaire (406) sensiblement mobile linéairement dans le sens du second axe (z), qui est sensiblement perpendiculaire au premier axe (y), par rapport au corps de base (402),
la suspension d'oscillateur secondaire est réalisée de sorte
qu'elle transmet le mouvement primaire sensiblement rigidement à l'oscillateur secondaire (430);
qu'elle guide l'oscillateur secondaire (430) en direction du mouvement secondaire qui est orienté dans le sens d'un troisième axe (x) et maintient l'oscillateur secondaire (430) sensiblement mobile en translation dans le sens du troisième axe (x), qui est sensiblement perpendiculaire au premier (y) et au second axe (z), par rapport à l'oscillateur primaire;
qu'elle empêche substantiellement une transmise réactive du mouvement secondaire à l'oscillateur primaire (406),
la suspension d'oscillateur primaire présentant des poutres élastiques qui permettent une déviation selon le second axe (z) et qui sont sensiblement rigides par rapport à une force dans le sens du premier axe (y) et du troisième axe (x).

20. Détecteur de vitesse de rotation (400) suivant la revendication 19, dans lequel l'oscillateur primaire (406) présente une forme de plateau polygonal, plusieurs groupes d'électrodes (408) étant disposés sur des côtés frontaux de l'oscillateur primaire (406) non parallèles au premier (y) ou au troisième axe (x) et plusieurs groupes d'électrodes fixes (410) étant, par ailleurs, disposés sur le corps de base (402) de telle sorte qu'ils s'emboîtent, chacun, dans le groupe d'électrodes (408) de l'oscillateur primaire (406), pour que l'oscillateur primaire (406) soit mobile, par application d'une tension entre les groupes d'électrodes fixes (410) et les groupes d'électrodes (408) de l'oscillateur primaire (406), dans une direction parallèle au second axe (z).

21. Détecteur de vitesse de rotation (400) suivant la revendication 19 ou 20, dans lequel l'oscillateur secondaire (430) présente deux éléments, chaque élément (430a, 430b) étant, par ailleurs, muni d'au moins un groupe d'électrodes d'oscillateur secondaire (450) s'emboîtant dans au moins un groupe d'électrodes fixes (452), pour détecter un mouvement de chaque élément d'oscillateur secondaire (430a, 430b) parallèle au troisième axe (x).

22. Détecteur de vitesse de rotation (400) suivant l'une quelconque des revendications 19 à 21, dans lequel la suspension d'oscillateur primaire (404) présente une pluralité de poutres élastiques (404b) reliées, par l'intermédiaire d'un ancrage (404a), au corps de base (402) et pouvant être déviées, par une force, parallèlement au second axe (z).

23. Détecteur de vitesse de rotation (400) suivant l'une quelconque des revendications 20 à 22, dans lequel la suspension d'oscillateur secondaire (434) présente au moins une poutre élastique par élément d'oscillateur secondaire (430a, 430b), les poutres élastiques pouvant être déviées, par suite d'une force parallèle au troisième axe (x), mais étant toutefois sensiblement rigides vis-à-vis d'une force parallèle au second axe (z).

24. Détecteur de vitesse de rotation (400) suivant l'une quelconque des revendications 19 à 23, présentant, par ailleurs, symétriquement par rapport au premier axe (y), une paire d'autres éléments d'oscillateur secondaire (432a, 432b) fixés à l'oscillateur primaire (406), à l'aide d'autres suspensions d'oscillateur secondaire (436), de manière déviable dans la première direction (y), afin de détecter, par ailleurs, une rotation du détecteur de vitesse de rotation (400) autour du troisième axe (x).

25. Détecteur de vitesse de rotation (500) destiné à détecter une rotation de celui-ci autour d'un premier axe (y) et d'un troisième axe (z), aux caractéristiques suivantes:
un corps de base (402);
un oscillateur primaire (506) pouvant être déplacé, par une excitation, selon un mouvement primaire orienté selon un second axe (x), le premier axe (y), le second axe (x) et le troisième axe (z) étant sensiblement perpendiculaires l'un à l'autre;
un oscillateur secondaire (514) pouvant être déplacé, par une force de Coriolis, selon un mouvement secondaire orienté, lors d'une rotation du détecteur de vitesse de rotation autour du premier axe (y), dans le sens du troisième axe (z) et, lors d'une rotation du détecteur de vitesse de rotation autour du troisième axe (z), dans le sens du premier axe (y), les surfaces principales de l'oscillateur primaire et de l'oscillateur secondaire s'étendant sensiblement dans le même plan, le mouvement primaire de l'oscillateur primaire se situant dans ce plan;
un premier dispositif ressort (504) formant une suspension d'oscillateur primaire et maintenant l'oscillateur primaire mobile par rapport au corps de base (402);
un second dispositif ressort (512), séparé du premier dispositif ressort (504), reliant l'oscillateur primaire (506) à l'oscillateur secondaire (514) et formant une suspension d'oscillateur secondaire,
la suspension d'oscillateur primaire étant réalisée de sorte qu'elle permet un mouvement de l'oscillateur primaire (506) dans le sens du second axe (x) et evíte de manière efficace un mouvement de l'oscillateur primaire dans le sens du premier axe (y) et du troisième axe (z),
la suspension d'oscillateur secondaire est réalisée de sorte
qu'elle transmet le mouvement primaire sensiblement rigidement à l'oscillateur secondaire (514);
qu'elle guide l'oscillateur secondaire (514) en direction du mouvement secondaire, la suspension d'oscillateur secondaire permettant un mouvement de translation de l'oscillateur secondaire dans le sens du troisième axe (z) et du premier axe (y) ; et
qu'elle empêche substantiellement une transmise réactive du mouvement secondaire à l'oscillateur primaire (506),
l'oscillateur secondaire (514) présentant au moins un groupe d'électrodes (550) s'emboîtant dans au moins un groupe d'électrodes fixe (552), pour capter un mouvement de l'oscillateur secondaire parallèle au premier axe (y), et
une électrode de détection plane (516) étant disposée sur le corps de base et au-dessous de l'oscillateur secondaire (514), pour détecter un mouvement de translation de l'oscillateur secondaire dans le sens du troisième axe (z).

26. Détecteur de vitesse de rotation (500) suivant la revendication 25, dans lequel la suspension d'oscillateur primaire (504a, 504b) présente une pluralité de poutres élastiques, mobiles dans la direction du second axe (x), reliées, par l'intermédiaire d'ancrages (504a), au corps de base.

27. Détecteur de vitesse de rotation (500) suivant la revendication 26, dans lequel l'oscillateur primaire (506) présente au moins un groupe d'électrodes (508) s'emboîtant dans un groupe d'électrodes fixes (510), afin de déplacer l'oscillateur primaire (506) de manière capacitive parallèlement au second axe (x).

28. Détecteur de vitesse de rotation (500) suivant la revendication 26 ou 27, dans lequel l'oscillateur primaire (506) présente un évidement dans lequel l'oscillateur secondaire (514) est positionné à l'aide de la suspension d'oscillateur secondaire (512).

29. Détecteur de vitesse de rotation (500) suivant l'une quelconque des revendications 26 à 28, dans lequel la suspension d'oscillateur secondaire (512) présente une pluralité de poutres élastiques disposées parallèles au second axe (x) et reliant l'oscillateur primaire (506) à l'oscillateur secondaire (514), les poutres élastiques présentant, par ailleurs, une section sensiblement carrée, afin de permettre une déviation dans le sens du troisième axe (z) ou dans le sens du premier axe (y) en réaction à une force de Coriolis par suite d'une rotation autour du premier axe (y) ou autour du troisième axe (z).

30. Détecteur de vitesse de rotation (100; 200; 400) suivant la revendication 1, 13 ou 19, dans lequel sont présents une pluralité d'oscillateurs secondaires, ceux-ci pouvant, chacun, être lus sélectivement, pour détecter une grandeur et une direction de la vitesse de rotation.
